(19) Europäisches Patentamt
European Patent Office
Office européen des brevets

(11) **EP 1 697 862 B1**

(12) **FASCICULE DE BREVET EUROPEEN**

(45) Date de publication et mention
de la délivrance du brevet:
**18.05.2011   Bulletin 2011/20**

(21) Numéro de dépôt: **04805546.1**

(22) Date de dépôt: **25.11.2004**

(51) Int Cl.:
***G06F 17/30*** *(2006.01)*

(86) Numéro de dépôt international:
**PCT/FR2004/003017**

(87) Numéro de publication internationale:
**WO 2005/055086 (16.06.2005 Gazette 2005/24)**

(54) **PROCEDE D'INDEXATION ET D'IDENTIFICATION DE DOCUMENTS MULTIMEDIAS**

VERFAHREN ZUM INDIZIEREN UND IDENTIFIZIEREN VON MULTIMEDIA-DOKUMENTEN

METHOD FOR INDEXING AND IDENTIFYING MULTIMEDIA DOCUMENTS

(84) Etats contractants désignés:
**AT BE BG CH CY CZ DE DK EE ES FI FR GB GR HU IE IS IT LI LU MC NL PL PT RO SE SI SK TR**

(30) Priorité:  **27.11.2003  FR 0313907**

(43) Date de publication de la demande:
**06.09.2006   Bulletin 2006/36**

(73) Titulaire: **Hologram Industries**
**77607 Marne La Vallee Cedex (FR)**

(72) Inventeurs:
  • **ESSAFI, Hassane**
   **91400 ORSAY (FR)**
  • **GUEZOULI, Larbi**
   **Résidence les Fonds Fanettes**
   **91190 Gif sur Yvette (FR)**
  • **SAYAH, Salima**
   **c/o Advestigo**
   **91198 Gif sur Yvette (FR)**
  • **BEHLOUL, Ali**
   **c/o Advestigo**
   **91998 Gif sur Yvette (FR)**
  • **MANDRIDAKE, Clarisse**
   **91140 Villebon sur Yvette (FR)**
  • **ESSAFI, Louafi**
   **93500 Pantin (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
  • **Y. CHANG, I. CHOI, J. CHOI, M. KIM, AND V. V. RAGHAVAN: "Conceptual retrieval based on feature clustering of documents" PROCEEDINGS OF ACM SIGIR WORKSHOP ON MATHEMATICAL-FORMAL METHODS IN INFORMATION RETRIEVAL, [Online] août 2002 (2002-08), pages 1-10, XP002297293 TAMPERE, FINLAND Extrait de l'Internet: URL:http://www.cacs.louisiana.edu/Publicat ions/ Raghavan/CCCK02.pdf> [extrait le 2004-09-15]**
  • **DIAMANTINI C ET AL: "A conceptual indexing method for content-based retrieval" DATABASE AND EXPERT SYSTEMS APPLICATIONS, 1999. PROCEEDINGS. TENTH INTERNATIONAL WORKSHOP ON FLORENCE, ITALY 1-3 SEPT. 1999, LOS ALAMITOS, CA, USA,IEEE COMPUT. SOC, US, 1 septembre 1999 (1999-09-01), pages 192-197, XP010352474 ISBN: 0-7695-0281-4**
  • **CARRE M ET AL: "INDEXATION AUDIO: UN ETAT DE L'ART STATE OF THE ART IN AUDIO INDEXING" ANNALES DES TELECOMMUNICATIONS - ANNALS OF TELECOMMUNICATIONS, PRESSES POLYTECHNIQUES ET UNIVERSITAIRES ROMANDES, LAUSANNE, CH, vol. 55, no. 9/10, septembre 2000 (2000-09), pages 507-525, XP000994593 ISSN: 0003-4347**

**Description**

La présente invention se rapporte aux procédés d'indexation et d'identification de documents multimédias.

Du point de vue général, l'identification d'un document multimédia comporte deux phases :

■ Une phase dite d'indexation, où l'on cherche à caractériser chaque document d'une base préalablement enregistrée par un nombre fini de paramètres pouvant facilement être stockés et manipulés ultérieurement.

■ Une phase dite de recherche, où suite à une requête formulée par l'utilisateur, par exemple l'identification d'une image question, l'on cherche tous les documents multimédias similaires ou répondant à cette requête.

Il existe déjà de nombreux procédés d'indexation d'images qui mettent en oeuvre l'extraction des attributs de la forme des objets composants l'image s'ils existent, ainsi que ceux de la texture ou de la couleur de fond de l'image

Toutefois, les procédés connus s'appliquent dans des domaines très spécialisés ou impliquent le traitement d'un très grand nombre d'informations qui conduisent à une complexité et une lenteur dans le traitement de ces informations.

On connaît notamment par l'article de Y. Chang et al. intitulé « Conceptual retrieval based on feature clustering of documents », publié dans Proceedings of ACM Sigir Workshop on Mathematical-Formal Methods in Information Retrieval, en août 2002, pages 1-10, un procédé de recherche de documents avec au moins une étape d'identification et d'extraction pour chaque document de termes constitués par des vecteurs caractérisant les propriétés textuelles du document, et une étape de décomposition en parties représentées par des concepts.

La présente invention vise à remédier aux inconvénients précités et à fournir un procédé d'indexation et d'identification de documents multimédias d'une application générale qui rationalise le processus de traitement et conduit à des temps de traitement plus courts tout en augmentant la qualité des résultats et leur fiabilité, ce qui permet notamment de procéder à des recherches efficaces par le contenu.

Ces buts sont atteints conformément à l'invention, grâce à un procédé d'indexation de documents multimédias, comprenant au moins les étapes suivantes :

(a) identification et extraction pour chaque document de termes $t_j$ constitués par des vecteurs caractérisant des propriétés du document multimédia à indexer, telles que la forme, la texture, la couleur ou la structure d'une image, l'énergie, le taux d'oscillation ou des informations fréquentielles d'un signal audio, ou un groupe de caractères d'un texte ,

(b) stockage des termes $t_i$ caractérisant des propriétés du document multimédia dans une base de termes comprenant P termes, caractérisé en ce qu'il comprend en outre les étapes suivantes :

(c) détermination d'un nombre maximum N de concepts souhaités regroupant les termes $t_i$ pertinents, N étant un nombre entier inférieur à P, et chaque concept $C_i$ étant prévu pour regrouper tous les termes voisins du point de vue de leurs caractéristiques,

(d) calcul de la matrice T de distances entre les termes $t_i$ de la base de termes,

(e) décomposition de l'ensemble P des termes $t_i$ de la base de termes en N parties $P_j$ ($1 \leq j \leq N$) telles que P = P1 $UP_2 \cdots UP_j \ldots UP_N$, chaque partie $P_j$ comprenant un ensemble de termes $t_{ij}$ et étant représentée par un concept $C_j$, les termes $t_i$ étant répartis sur la base de la matrice T, de telle façon que les termes les plus éloignés les uns des autres se trouvent dans des parties $P_l$, $P_m$ distinctes et les termes proches les uns des autres se trouvent dans la même partie $P_l$,

(f) structuration du dictionnaire de concepts de manière à constituer un arbre binaire dans lequel chaque feuille de l'arbre binaire contient un concept $c_i$ du dictionnaire et chaque noeud de l'arbre contient les informations nécessaires à la scrutation de l'arbre lors d'une phase d'identification d'un document multimédia par comparaison avec les documents précédemment indexés, et

(g) construction d'une base d'empreintes constituée de l'ensemble des concepts $c_i$ représentant les termes $t_i$ des documents à indexer, chaque document étant associé à une empreinte qui lui est propre.

De façon plus particulière, on associe à chaque concept $c_i$ de la base d'empreintes un ensemble d'informations comprenant le nombre NbT de termes dans les documents où le concept $c_i$ est présent.

Selon un aspect particulier et l'invention, pour chaque document où un concept $c_i$ est présent, on enregistre une empreinte du concept $c_i$ dans le document, cette empreinte comprenant la fréquence d'occurrence du concept $c_i$, l'identification des concepts qui sont voisins du concept $c_i$ dans le document et un score qui est une valeur moyenne des mesures de similarités entre le concept $c_i$ et les termes $t_i$ du document qui sont les plus proches du concept $c_i$.

Avantageusement, le procédé selon l'invention comprend une étape d'optimisation de la partition de l'ensemble P des termes de la base de termes pour décomposer cet ensemble P en M classes C$_i$ (1$\leq$ i $\geq$ M, avec M $\leq$ P), de manière à réduire l'erreur de la répartition de l'ensemble P des termes de la base de termes en N parties (P$_1$, P$_2$,... P$_N$) où chaque

partie P$_i$ est représentée par le terme t$_i$ qui sera pris comme concept C$_i$, l'erreur commise $\varepsilon$ étant telle que $\varepsilon = \sum\limits_{i=1}^{N} \varepsilon_{t_i}$

où $\varepsilon_{t_i} = \sum\limits_{t_j \in P_i} d^2(t_i, t_j)$ est l'erreur commise lorsqu'on remplace les termes t$_j$ d'une partie P$_i$ par t$_i$.

Dans ce cas, le procédé peut comprendre les étapes suivantes :

(i) on décompose l'ensemble P de termes en deux parties P$_1$ et P$_2$;
(ii) on détermine les deux termes les plus éloignés t$_i$ et t$_j$ de l'ensemble P correspondant à la plus grande distance D$_{ij}$ de la matrice T de distances ;
(iii) pour chaque terme t$_k$ de l'ensemble P, on examine si la distance D$_{k;}$ entre le terme t$_k$ et le terme t$_i$ est plus petite que la distance D$_{kj}$ entre le terme t$_k$ et le terme t$_j$, si c'est le cas on affecte le terme t$_k$ à la partie P$_i$ et si ce n'est pas le cas on affecte le terme t$_k$ à la partie P$_2$;
(iv) on itère l'étape (i) jusqu'à l'obtention du nombre N de points P$_i$ souhaité et à chaque itération on applique les étapes (ii) et (iii) sur les termes des parties P$_i$ et P$_2$.

Le procédé selon l'invention peut être plus particulièrement caractérisé en ce qu'il comprend une optimisation à partir des N parties disjointes {P$_1$, P$_2$,... P$_N$} de l'ensemble P ainsi que des N termes {t$_1$, t$_2$, t$_N$} qui les représentent pour réduire l'erreur de décomposition de l'ensemble P en N parties, et en ce qu'il comprend les étapes suivantes :

(i) calcul des centres de gravité C$_i$ des parties P$_i$

(ii) calcul des erreurs $\varepsilon C_i = \sum\limits_{tj \in Pi} d^2(C_i, t_j)$ et $\varepsilon t_i = \sum\limits_{tj \in Pi} d^2(t_i, t_j)$ lorsqu'on remplace les termes t$_j$ de la

partie P$_i$ respectivement par C$_i$ et par t$_i$,
(iii) comparaison de $\varepsilon t_i$ et e$C_i$ et remplacement de t$_i$ par C$_i$ si $\varepsilon C_i \leq \varepsilon t_i$,
(iv) calcul de la nouvelle matrice T de distances entre les termes t$_i$ de la base de termes et processus de décomposition de l'ensemble P des termes de la base de termes en N parties, sauf si une condition d'arrêt est remplie avec

$\dfrac{\varepsilon c_t - \varepsilon c_{t+1}}{\varepsilon c_t}$ < seuil, où $\varepsilon C_t$ représente l'erreur commise à l'instant t.

Afin de faciliter la recherche et l'identification de documents, pour effectuer une structuration du dictionnaire de concepts, on produit de façon itérative à chaque itération une carte de navigation en commençant par scinder l'ensemble des concepts en deux sous-ensembles, puis en sélectionnant un sous-ensemble à chaque itération jusqu'à l'obtention du nombre de groupes souhaité ou jusqu'à ce qu'un critère d'arrêt soit satisfait.
Le critère d'arrêt peut être caractérisé par le fait que les sous-ensembles obtenus sont tous homogènes avec un écart-type faible.
De façon plus particulière, lors de la structuration du dictionnaire de concepts, on détermine des indicateurs de navigation à partir d'une matrice $M = [c_1, c_2,... c_N] \in \mathfrak{R}^{p*N}$ de l'ensemble C des concepts $c_i \in \mathfrak{R}^p$ où

c$_i$ représente un concept de p valeurs, selon les étapes suivantes :

(i) on calcule un représentant *w* de la matrice *M*,
(ii) on calcule la matrice de covariance $\tilde{M}$ entre les éléments de la matrice M et le représentant *w* de la matrice M,
(iii) on calcule un axe de projection *u* des éléments de la matrice M,
(iv) on calcule la valeur pi = *d(u, Ci)* - *d(u, w)* et on décompose l'ensemble de concepts C en deux sous-ensembles C1 et C2 de la manière suivante :

$$\begin{cases} c_i \in C1 \ si \ pi \leq 0 \\ c_i \in C2 \ si \ pi > 0 \end{cases}$$

(v) on stocke dans le noeud associé à C les informations {u, w, |p1|, p2} où p1 est le maximum de tous les pi $\leq$ 0 et p2 est le minimum de tous les pi > 0, l'ensemble des informations {u, w, |p1|, p2} constituant les indicateurs de navigation dans le dictionnaire de concept.

Selon un mode particulier de réalisation, on analyse à la fois les composantes structurelles et le complément de ces composantes structurelles constitué par les composantes texturales d'une image du document, et :

(a) lors de l'analyse des composantes structurelles de l'image

(a1) on procède à une répartition des zones frontières des structures de l'image en différentes classes selon l'orientation de la variation locale d'intensité de manière à définir des éléments de support structurel (ESS) de l'image, et
(a2) on procède par analyse statistique à la construction de termes constitués par des vecteurs décrivant les propriétés locales et globales des éléments de support structurels,

(b) lors de l'analyse des composantes texturales de l'image

(b1) on procède à une détection et une caractérisation paramétrique d'une composante purement aléatoire de l'image,
(b2) on procède à une détection et une caractérisation paramétrique d'une composante périodique de l'image,
(b3) on procède à une détection et une caractérisation paramétrique d'une composante directionnelle de l'image,

(c) on regroupe dans un nombre limité de concepts l'ensemble des éléments descriptifs de l'image constitués par d'une part les termes décrivant les propriétés locales et globales des éléments de support structurels et d'autre part les paramètres des caractérisations paramétriques des composantes aléatoire, périodique et directionnelle définissant les composantes texturales de l'image, et

(d) on définit pour chaque document une empreinte à partir des occurrences, des positions et des fréquences desdits concepts.

Avantageusement, les propriétés locales des éléments de support structurels prises en compte pour la construction de termes comprennent au moins le type de support choisi parmi une bande linéaire ou un arc de courbe, les dimensions en longueur et largeur du support, la direction principale du support et la forme et les propriétés statistiques des pixels constituant le support.
Les propriétés globales des éléments de support structurels prises en compte pour la construction de termes comprennent au moins le nombre de chaque type de supports et leur disposition spatiale.
De préférence, lors de l'analyse des composantes structurelles de l'image on procède à un test préalable de détection de la présence d'au moins une structure dans l'image et, en cas d'absence de structure, on passe directement à l'étape de l'analyse des composantes texturales de l'image.
Avantageusement, pour procéder à une répartition des zones frontières des structures de l'image en différentes classes, à partir de l'image numérisée définie par l'ensemble des pixels y(i,j) où (i,j) $\in$ I x J, avec I et J désignant respectivement le nombre de lignes et le nombre de colonnes de l'image, on calcule l'image gradient vertical $g_v$ (i,j) avec (i,j) $\in$ I x J et l'image gradient horizontal $g_h$ avec (i,j) $\in$ I x J et on procède au partitionnement de l'image selon l'orientation locale de son gradient en un nombre fini de classes équidistantes, l'image contenant l'orientation du gradient étant définie par la formule

$$O\ (i,j) = \arctan \left[ \frac{gh(i,j)}{gv(i,j)} \right], \qquad (1)$$

on identifie les classes constituant des régions de support susceptibles de contenir des éléments de support significatifs, et à partir des régions de support, on détermine les éléments de support significatifs et on les répertorie selon des critères prédéterminés.

Selon un aspect particulier de l'invention, on analyse les formes d'une image d'un document selon les étapes suivantes :

(a) on procède à une multirésolution suivie d'une décimation de l'image,
(b) on définit l'image dans l'espace logarithmique polaire.
(c) on représente l'image ou la portion de l'image concernée par sa transformée de Fourier H,
(d) on procède à une caractérisation de la transformée de Fourier H de la façon suivante :

(d1) on projette H dans plusieurs directions pour obtenir un ensemble de vecteurs dont la dimension est égale à la dimension du mouvement de projection,
(d2) on calcule les propriétés statistiques de chaque vecteur de projection, et

(e) on représente la forme de l'image par un terme $t_i$ constitué des valeurs des propriétés statistiques de chaque vecteur de projection.

Selon un aspect particulier de l'invention, lors de l'indexation d'un document multimédia comportant des signaux vidéo, on choisit des termes $t_i$ constitués par des images-clés représentant des groupes d'images homogènes consécutives, et on détermine des concepts $c_i$ par regroupement de termes $t_i$.

Pour déterminer des images-clés constituant des termes $t_i$, on élabore d'abord un vecteur score VS comprenant un ensemble d'éléments VS(i) matérialisant la différence ou la similarité entre le contenu d'une image d'indice i et celui d'une image d'indice i-1, et on analyse le vecteur score VS afin de déterminer les images-clés qui correspondent aux maximums des valeurs des éléments VS(i) du vecteur score VS.

De façon plus particulière, une image d'indice j est considérée comme une image-clé si la valeur VS(j) de l'élément correspondant du vecteur score VS est un maximum et que la valeur VS(j) est située entre deux minimums min G et min D et que le minimum M1 tel que M1=($|VS_{(j)}$-min G|, $|VS_{(j)}$ - min D|) est supérieur à un seuil donné.

On considèrera à nouveau l'indexation d'un document multimédia, comportant des composantes audio, on échantillonne et décompose le document en trames, qui sont ensuite regroupées en clips dont chacun est caractérisé par un terme $t_i$ constitué par un vecteur de paramètre.

Une trame peut comprendre par exemple entre environ 512 et 2048 échantillons du document audio échantillonné.

Avantageusement, les paramètres pris en compte pour la définition des termes $t_i$ comprennent des informations temporelles correspondant à au moins l'un des paramètres suivants : l'énergie des trames du signal audio, l'écart-type des énergies des trames dans les clips, le rapport des variations sonores, le rapport de basse énergie, le taux d'oscillation autour d'une valeur prédéterminée, le haut taux d'oscillation autour d'une valeur prédéterminée,, la différence entre le nombre de taux d'oscillation au-dessus et au-dessous du taux d'oscillation moyen des trames de clips, la variance du taux d'oscillation, le rapport des trames silencieuses.

Toutefois, de façon alternative ou complémentaires, de façon avantageuse, les paramètres pris en compte pour la définition des termes $t_i$ comprennent des informations fréquentielles correspondant à au moins l'un des paramètres suivants : le centre de gravité du spectre de fréquence de la transformée de Fourier courte du signal audio, la largeur de bande du signal audio, le rapport entre l'énergie dans une bande de fréquence et l'énergie totale dans toute la bande de fréquence du signal audio échantillonné, la valeur moyenne de la variation du spectre de deux trames adjacentes dans un clip, la fréquence de coupure d'un clip.

De façon plus particulière, les paramètres pris en compte pour la définition des termes $t_i$ peuvent comprendre au moins la modulation d'énergie à 4 Hz.

D'autres caractéristiques et avantages de l'invention ressortiront de la description suivantes de modes particuliers de réalisation, donnés à titre d'exemples, en référence aux dessins annexés, sur lesquels :

- la Figure 1 est un schéma-bloc montrant le processus de production d'un dictionnaire de concepts à partir d'une base de documents, conformément à l'invention,
- la Figure 2 montre le principe de construction d'une base de concepts à partir de termes,
- la Figure 3 est un schéma-bloc montrant le processus de structuration d'un dictionnaire de concepts, conformément à l'invention,
- la Figure 4 montre la structuration d'une base d'empreintes mise en oeuvre dans le cadre du procédé selon l'invention,
- la Figure 5 est un organigramme montrant les différentes étapes de construction d'une base d'empreintes,
- la Figure 6 est un organigramme montrant les différentes étapes d'identification de documents,

- la Figure 7 est un organigramme montrant la sélection d'une première liste de réponses,
- la Figure 8 est un organigramme montrant les différentes étapes d'une phase d'indexation de documents conformément au procédé selon l'invention,
- la Figure 9 est un organigramme montrant les différentes étapes d'extraction de termes dans le cas du traitement d'images,
- la Figure 10 est un schéma résumant le processus de décomposition d'une image régulière et homogène,
- les Figures 11 à 13 montrent trois exemples d'images contenant différents types d'éléments,
- les Figures 14a à 14f montrent respectivement un exemple d'image originale, un exemple d'image après traitement en prenant en compte le module du gradient, et quatre exemples d'images traitées avec démantèlement des zones frontières de l'image,
- la Figure 15a représente un premier exemple d'image contenant un élément directionnel,

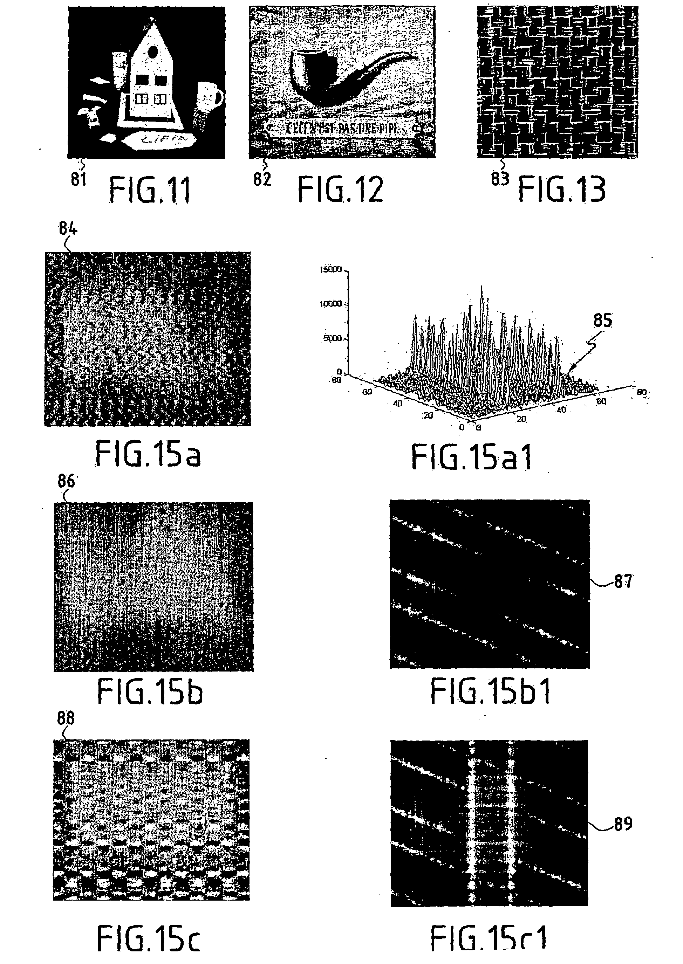

- la Figure 15a1 est une vue 3D du spectre de l'image de la Figure 15a,
- la Figure 15b représente un deuxième exemple d'image contenant un élément directionnel,
- la Figure 15b1 est une image module de Fourier de l'image de la Figure 15b,
- la Figure 15c représente un troisième exemple d'image contenant deux éléments directionnels,
- la Figure 15c1 est une image module de Fourier de l'image de la Figure 15c,

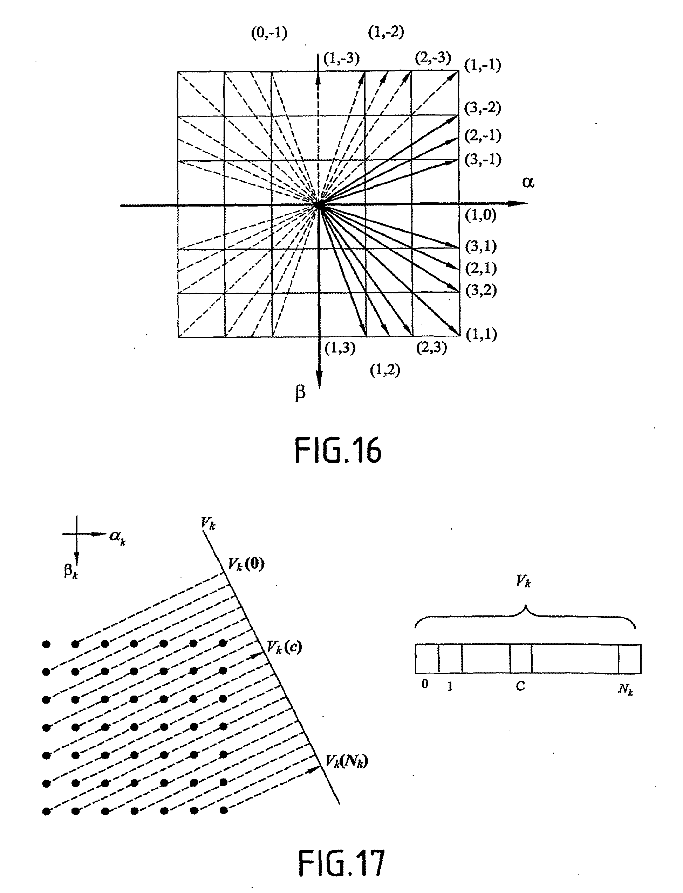

- la Figure 16 illustre des directions de projection pour des couples d'entiers $(\alpha, \beta)$ dans le cadre du calcul de la transformée de Fourier Discrète d'une image,
- la Figure 17 illustre un exemple de mécanisme de projection avec l'exemple d'un couple d'entrées $(\alpha_k, \beta_k) = (2, -1)$,

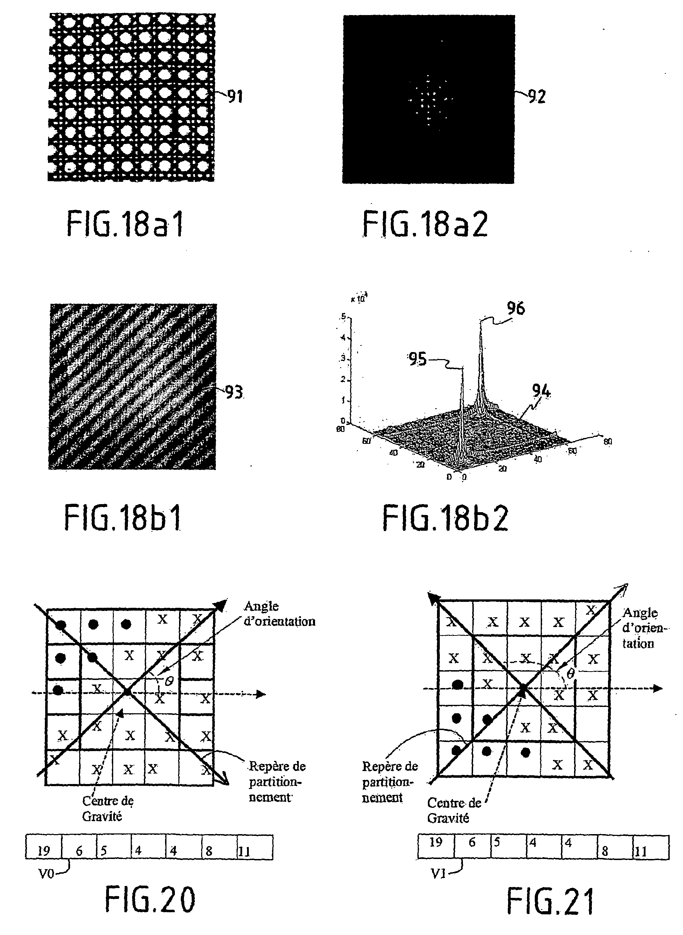

- la Figure 18a1 représente un exemple d'image contenant des composantes périodiques,
- la Figure 18a2 représente l'image module de la transformée de Fourier Discrète de l'image de la Figure 18a1,
- la Figure 18b1 représente un exemple d'image synthétique contenant une composante périodique,
- la Figure 18b2 représente une vue en 3D de la transformée de Fourier Discrète de l'image de la Figure 18b1, faisant apparaître une paire de pics symétriques,

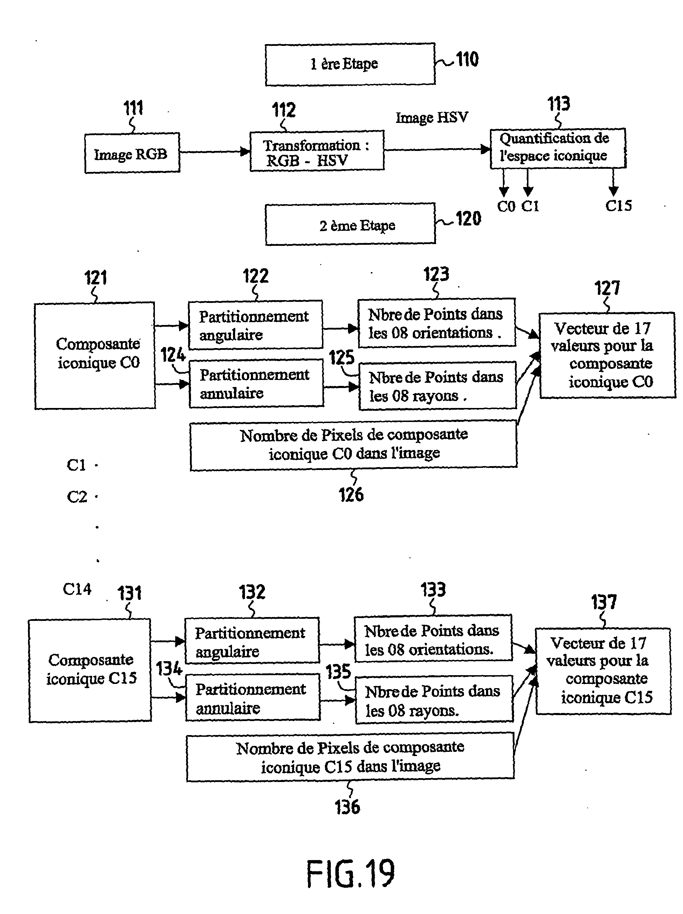

- la Figure 19 est un organigramme montrant les différentes étapes de traitement d'une image avec établissement d'un vecteur caractérisant la distribution spatiale des propriétés iconiques de l'image,
- la Figure 20 montre un exemple de partitionnement d'une image et de création d'un vecteur caractéristique de cette image,
- la Figure 21 montre une rotation de 90˚ de l'image partitionnée de la Figure 20 et la création d'un vecteur caractéristique de cette image,

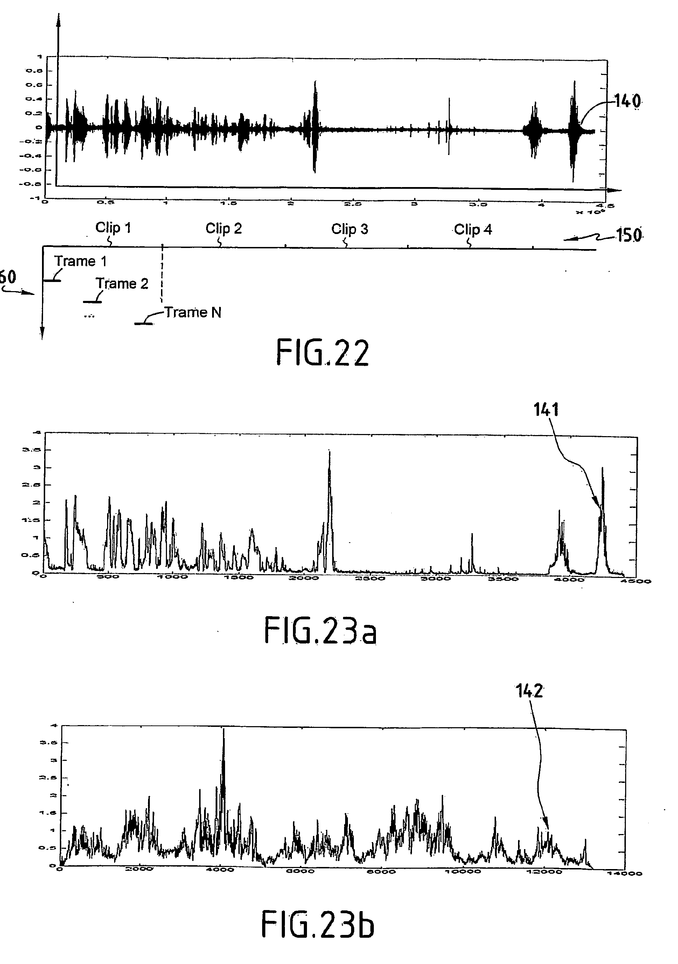

- la Figure 22 montre la décomposition d'un signal sonore en trames en clips,
- la Figure 23a montre la variation de l'énergie d'un signal de parole,
- la Figure 23b montre la variation de l'énergie d'un signal de musique,

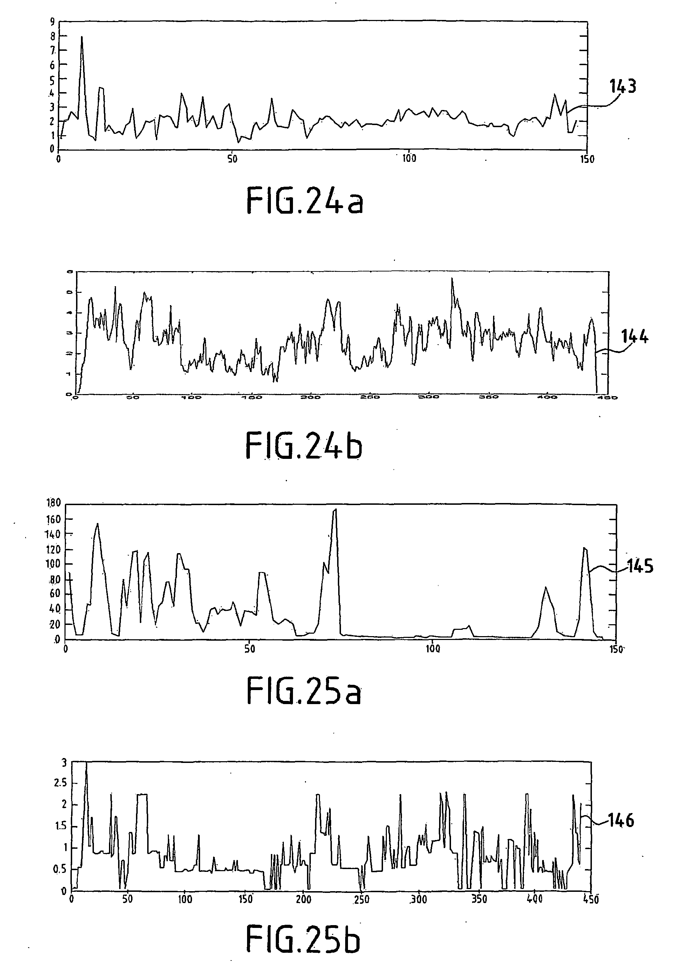

- la Figure 24a montre le taux de passage par zéro d'un signal de parole,
- la Figure 24b montre le taux de passage par zéro d'un signal de musique,
- la Figure 25a montre le centre de gravité du spectre de fréquence de la transformée de Fourier courte d'un signal de parole,
- la Figure 25b montre le centre de gravité du spectre de fréquence de la transformée de Fourier courte d'un signal de musique,

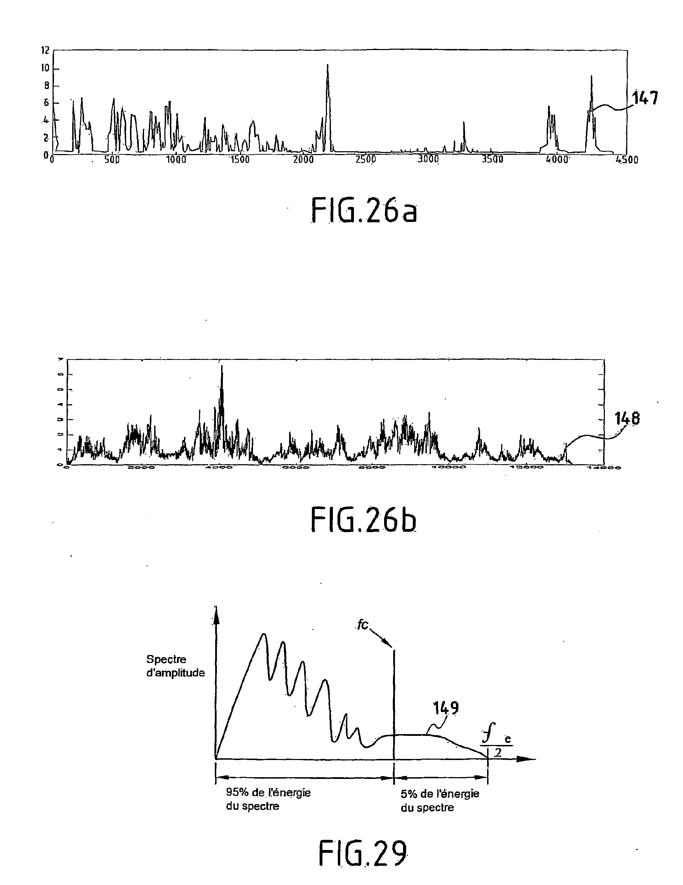

- la Figure 26a montre la largeur de bande d'un signal de parole,
- la Figure 26b montre la largeur de bande d'un signal de musique,

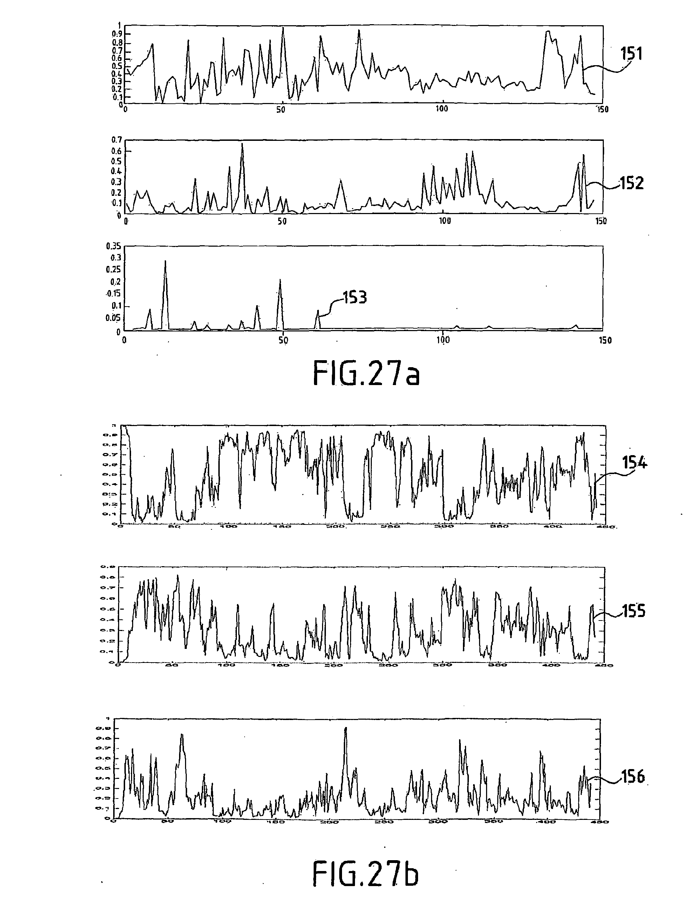

- la Figure 27a montre pour trois sous-bandes de fréquence 1, 2, 3 le rapport d'énergie dans chaque sous-bande de fréquence sur l'énergie totale de toute la bande de fréquence, pour un signal de parole,
- la Figure 27b montre pour trois sous-bandes de fréquence 1, 2, 3 le rapport d'énergie dans chaque sous-bande de fréquence sur l'énergie totale de toute la bande de fréquence, pour un signal de musique,

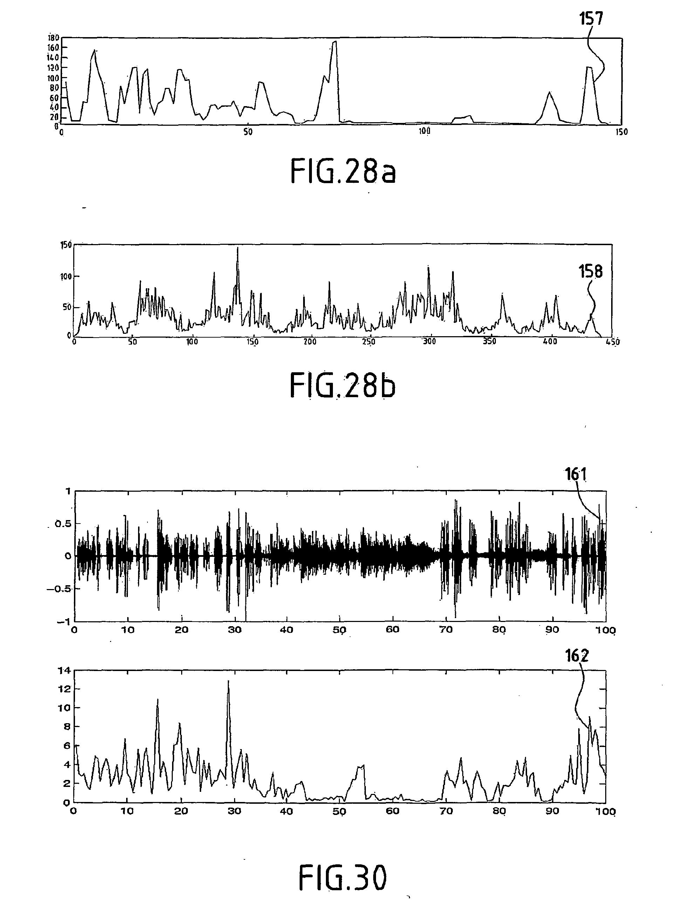

- la Figure 28a montre le flux spectral d'un signal de parole,
- la Figure 28b montre le flux spectral d'un signal de musique,
- la Figure 29 est un graphique illustrant la définition de la fréquence de coupure d'un clip, et
- la Figure 30 illustre, pour un signal audio, la modulation de l'énergie autour de 4 Hz.

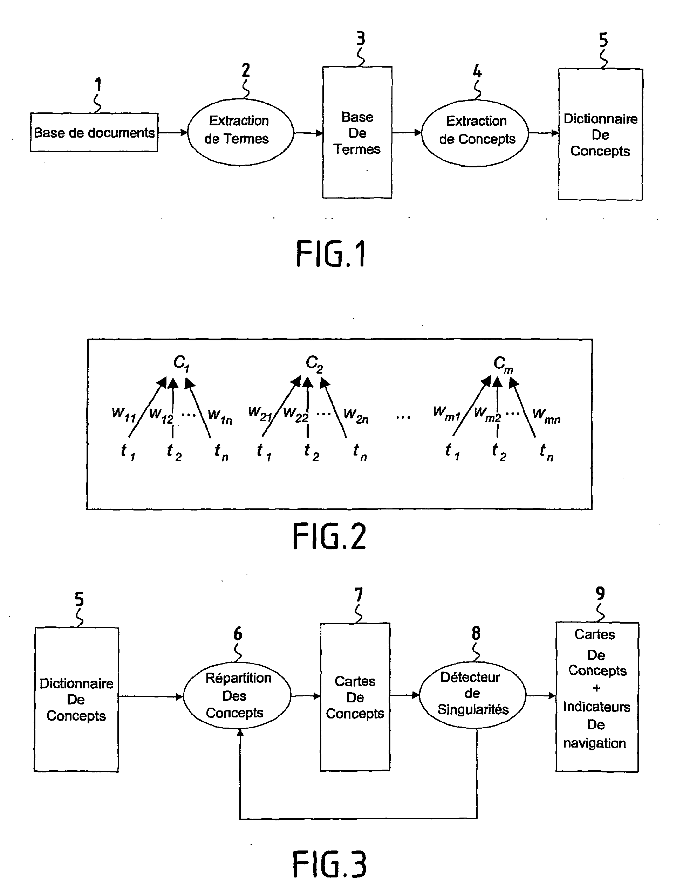

On décrira d'abord en référence aux Figures 1 à 5 le principe général du procédé d'indexation de documents multimédias selon l'invention, qui conduit à la construction d'une base d'empreintes, chaque document indexé étant associé à une empreinte qui lui est propre.

A partir d'une base de documents multimédias 1, une première étape 2 consiste en l'identification et l'extraction, pour chaque document, de termes $t_i$ constitués par des vecteurs caractérisant des propriétés du document à indexer.

A titre d'exemples, on décrira, en référence aux Figures 22 à 30, la façon dont il est possible d'identifier et d'extraire des termes $t_i$ pour un document sonore.

Un document audio 140 est d'abord décomposé en trames 160 qui sont regroupées par la suite en clips 150 dont chacun va être caractérisé par un terme constitué par un vecteur de paramètres (Figure 22). Un document audio 140 sera donc caractérisé par un ensemble de termes $t_i$ qui seront stockés dans une base de termes 3 (Figure 1).

Les documents audio dont on a extrait leur vecteur caractéristique peuvent être échantillonnés par exemple à 22 050 Hz afin d'éviter l'effet de crénelage. Le document est ensuite divisé en un ensemble de trames dont le nombre d'échantillons par trame est fixé en fonction du type de fichier à analyser.

Pour un document audio riche en fréquences et qui contient beaucoup de variations, comme les films par exemple, les émissions de variétés ou encore les émissions sportives, le nombre d'échantillons dans une trame doit être faible, de l'ordre de 512 échantillons par exemple. En revanche, pour un document audio homogène ne contenant que de la parole ou de la musique par exemple, ce nombre doit être important, par exemple de l'ordre de 2 048 échantillons.

Un clip de document audio peut être caractérisé par différents paramètres servant à constituer les termes et caractérisant des informations temporelles ou fréquentielles.

Il est possible d'utiliser tout ou partie des paramètres qui seront mentionnés ci-dessous pour former des vecteurs de paramètres constituant les termes identifiant les clips successifs du document audio échantillonné.

L'énergie des trames du signal audio constitue un premier paramètre représentant une information temporelle.

L'énergie du signal audio varie beaucoup pour la parole alors qu'elle est plutôt stable pour la musique. Elle permet donc de discriminer la parole de la musique mais aussi de détecter les silences. L'énergie peut être couplée à un autre paramètre temporel tel que le taux d'oscillation (TO) autour d'une valeur, qui peut correspondre par exemple au taux de passage par zéro (TPZ). En effet un TO faible et une énergie forte sont synonymes d'un son voisé tandis qu'un TO élevé induit une zone non voisée.

La Figure 25a représente un signal 141 qui illustre la variation de l'énergie dans le cas d'un signal de parole.

La Figure 23b représente un signal 142 qui illustre la variation de l'énergie dans le cas d'un signal de musique.

Soit N le nombre d'échantillons dans une trame, le volume ou énergie E(n) est défini par :

$$E(n) = \frac{1}{N} \sum_{i=0}^{N-1} S_n^2(i). \qquad (2)$$

où $S_n(i)$ représente la valeur de l'échantillon i de la trame d'indice n d'un signal audio.

D'autres paramètres représentatifs d'informations temporelles peuvent être déduits de l'énergie, comme par exemple :

- l'écart type des énergies des trames dans les clips (encore appelé EEC ou VSTD) qui constitue un état défini comme la variance des volumes des trames dans un clip normalisé par le maximum du volume des trames du clip,
- le rapport des variations sonores (RVS) qui est constitué par la différence entre le maximum et le minimum des volumes des trames d'un clip divisé par le maximum des volumes de ces trames,
- le rapport de basse énergie (ou LER) qui est le pourcentage des trames dont le volume est inférieur à un seuil (qui est fixé par exemple à 95% du volume moyen d'un clip).

D'autres paramètres permettent de caractériser l'aspect temporel d'un clip, en particulier le taux d'oscillation autour d'une valeur prédéterminée, qui, lorsque cette valeur prédéterminée est zéro, définit un taux de passage par zéro (ou TPZ).

Le TPZ peut aussi être défini par le nombre de fois où l'onde passe par zéro.

$$Z(n) = \frac{1}{2} \left( \sum_{i=0}^{N-1} \left| Sign(S_n(i) \| - (Sign(S_n(i-1)) \| \right) \right) \frac{f_s}{N} \qquad (3)$$

$S_n(i)$ : Valeur de l'échantillon i, de la trame n.

N : nombre d'échantillons dans une trame.

$f_s$ : fréquence d'échantillonnage.

Cette caractéristique est fréquemment utilisée pour la classification parole / musique. En effet, les brusques variations du TPZ sont significatives de l'alternance voisée / non voisée donc de la présence de parole. Pour la parole, le TPZ est faible pour les zones voisées et très élevé pour les zones non voisées alors que pour la musique, les variations du TPZ sont très faibles.

La Figure 24a montre une courbe 143 illustrant un exemple de TPZ pour un signal de parole.

La Figure 24b montre une courbe 144 illustrant un exemple de TPZ pour un signal de musique.

Un autre paramètre caractérisant l'aspect temporel d'un clip peut être constitué par le haut taux d'oscillation autour d'une valeur prédéterminée qui, lorsque cette valeur prédéterminée est zéro, définit un haut taux de passage par zéro (ou HTPZ).

Le HTPZ peut être défini comme étant le rapport du nombre de trames dont le TPZ est à une valeur $\alpha$, par exemple 1,5 au-dessus du TPZ moyen du clip (1s) :

$$HTPZ = \frac{1}{2N}\sum_{n=0}^{N-1}\left[\operatorname{sgn}(TPZ(n) - 1.5avTPZ) + 1\right] \qquad (4)$$

$$\text{tel que : } avTPZ = \frac{1}{N}\sum_{n=0}^{N-1}TPZ(n) \ . \qquad (5)$$

avec:

   n : indice de la trame.

   N : nombre de trames dans un clip.

Pour les segments de parole les clips sont de 0 à 200 s avec un HTPZ autour de 0,15.

En revanche, pour les segments de musique, les clips sont de 200 à 350 s et le HTPZ varie autour de 0,05 et est en général quasi nul.

Pour le son d'environnement les segments correspondant aux clips sont de 351 à 450 s,

Le HTPZ est faible pour le bruit blanc et grand pour un son assourdissant (tambour par exemple).

On peut encore définir le paramètre DTPZ qui est constitué par la différence entre le nombre de TPZ au-dessus et en-dessous du TPZ moyen des trames d'un clip, ainsi que le paramètre VTPZ qui est constitué par la variance du TPZ.

Un autre paramètre caractérisant l'aspect temporel d'un clip est le rapport des trames silencieuses (RFS) qui est le pourcentage des trames non silencieuses dans un clip.

Une trame est non silencieuse si son volume dépasse un certain seuil (10) et si la valeur du TPZ est inférieure à un Tpz seuil.

Ainsi le rapport de trames non silencieuses dans un clip, permet de détecter le silence.

D'autres propriétés statistiques du TPZ peuvent être utilisées comme paramètres caractéristiques, telles que :

   i) moment du troisième ordre de la moyenne,
   ii) le nombre de TPZ dépassant un certain seuil.

Les paramètres pris en compte pour la définition des termes $t_i$ peuvent comprendre également des informations fréquentielles qui prennent en compte le calcul de la transformée de Fourier rapide (FFT) du signal audio.

Ainsi, un paramètre appelé centroïde spectacle (CS) peut être défini comme étant le centre de gravité du spectre de fréquence de la transformée de Fourier courte (STFT) du signal audio :

$$CS(n) = \frac{\sum_{i=0}^{N-1} iS_n(i)}{\sum_{i=0}^{N-1} S_n(i)} \qquad (6)$$

telle que $S_n(i)$ : Puissance spectrale de la trame i du clip n .

Le paramètre CS est élevé pour la musique car les hauteurs sont réparties sur une zone plus étendue que celle de la parole (en général 6 octaves pour la musique et 3 pour la parole ). Il a une relation avec la sensation de la brillance du son qu'on entend. C'est un attribut perceptuel important pour la caractérisation du timbre .

La Figure 25a montre une courbe 145 illustrant un exemple de CS pour un signal de parole.

La Figure 25b montre une courbe 146 illustrant un exemple de CS pour un signal de musique.

Un autre paramètre est constitué par la largeur de bande LB qui peut être calculée à partir de la variance du paramètre précédent CS(n).

$$LB^2(n) = \frac{\sum_{i=0}^{N-1}(i - CS(n))^2 S_n(i)}{\sum_{i=0}^{N-1} S_n(i)} \qquad (7)$$

La largeur de bande LB est importante tant en musique qu'en parole.

La Figure 26a montre une courbe 147 illustrant un exemple de largeur de bande d'un signal de parole.

La Figure 26b montre une courbe 148 illustrant un exemple de largeur de bande d'un signal de musique.

Un autre paramètre utile est constitué par le rapport ERSB entre l'énergie dans une sous-bande de fréquence i et l'énergie totale dans toute la bande de fréquence du signal audio échantillonné.

En considérant les propriétés perceptuelles de l'oreille humaine, la bande de fréquence à été divisée en quatre sous-bandes où ces dernières correspondent aux filtres de Cochlear. Quand la fréquence d'échantillonnage est de 22025 Hz, les bandes de fréquences sont : 0-630Hz , 630-1720Hz , 1720-4400Hz et 4400-11025Hz . Pour chacune de ces bandes on calcule son énergie ERSBi, qui correspond au rapport de l'énergie de cette dernière sur l'énergie dans toute la bande de fréquence .

La Figure 27a montre trois courbes 151, 152, 153 illustrant pour trois sous-bandes de fréquence 1, 2, 3 le rapport d'énergie dans chaque sous-bande de fréquence sur l'énergie totale de toute la bande de fréquence, pour un exemple de signal de parole.

La Figure 27b montre trois courbes 154, 155, 156 illustrant pour trois sous-bandes de fréquence 1, 2, 3 le rapport d'énergie dans chaque sous-bande de fréquence sur l'énergie totale de toute la bande de fréquence, pour un exemple de signal de musique.

Un autre paramètre est constitué par le flux spectral qui est défini comme la valeur moyenne de la variation du spectre de deux trames adjacentes dans un clip :

$$FS(n) = \frac{1}{N}\sum_{i=1}^{N}\left[\log(S_n(i) + \delta) - \log(S_n(i-1) + \delta)\right]^2 \qquad (8)$$

où

δ Une constante de faible valeur,

$S_n(i)$ : Puissance spectrale de la trame i du clip n.

Le flux spectral de la parole est en général plus important que celui de la musique, et celui du son d'environnement est le plus grand. Il varie considérablement en comparaison avec les deux autres signaux.

La Figure 28a montre une courbe 157 illustrant le flux spectral d'un exemple de signal de parole.

La Figure 28b montre une courbe 158 illustrant le flux spectral d'un exemple de signal de musique.

Un autre paramètre utile est constitué par la fréquence de coupure d'un clip (FCC).

La Figure 29 montre une courbe 149 illustrant le spectre d'amplitude en fonction de la fréquence fe, et la fréquence de coupure fc qui est la fréquence en dessous de laquelle 95% de l'énergie du spectre (la puissance spectrale) est concentrée.

Pour déterminer la fréquence de coupure du clip, on calcule la transformée de Fourier du clip DS(n)

$$DS(n) = \sum_{i=0}^{N-1} S_n^2(i) \quad (9).$$

La fréquence *fc* est déterminée par :

$$\sum_{i=0}^{fC} S_n^2(i) \ge 0.95 \times DS \quad (10)$$

et

$$\sum_{i=0}^{fC-1} S_n^2(i) < 0.95 \times DS) \quad (11)$$

La FCC est plus élevée pour un son non voisé (son riche en hautes fréquences) que pour un son voisé (présence de parole où la puissance est concentrée dans les basses fréquences).

Cette mesure permet de caractériser les alternances voisées/non voisées de la parole car cette valeur est faible pour les clips contenant uniquement de la musique.

D'autres paramètres peuvent encore être pris en compte pour la définition des termes $t_i$ d'un document audio, comme la modulation d'énergie autour de 4 Hz, qui constitue un paramètre issu à la fois d'une analyse fréquentielle et d'une analyse temporelle.

La modulation d'énergie à 4 Hz (4 ME) est calculée à partir du contour du volume, selon la formule suivante :

$$4ME = \frac{\sum_{i=0}^{N/T}(\sum_{j=0}^{T} W(j) S_n^2(j+i \times T)) \Big/ T)}{\sum_{i=0}^{N} S_n^2(i)} \quad (12)$$

où

$S_n(i)$ : Puissance spectrale de la trame i du clip n .

$W(j)$ : Fenêtre triangulaire centrée à 4Hz.

T : Largeur d'un clip.

La parole a une 4ME plus importante que la musique car, pour la parole, les changements de syllabe se situent autour de 4Hz.

Une syllabe est en effet une combinaison d'une zone de faible énergie (consonne) et d'une zone de forte énergie (voyelle).

La Figure 30 montre une courbe 161 illustrant un exemple de signal audio et une courbe 162 montrant pour ce signal la modulation de l'énergie autour de 4 Hz.

On a décrit ci-avant le cas de documents multimédias comportant des composantes audio.

Dans le cas de l'indexation de documents multimédias comportant des signaux vidéo, on peut choisir des termes $t_i$ constitués par des images-clés représentant des groupes d'images homogènes consécutives.

Les termes $t_i$ peuvent à leur tour représenter par exemple les couleurs dominantes, les propriétés texturales, les structures de zones dominantes des images-clés du document vidéo.

D'une manière générale, dans le cas des images qui sera développé plus en détail plus loin, les termes peuvent représenter les couleurs dominantes, les propriétés texturales, les structures des zones dominantes de l'image. Plusieurs procédés peuvent être mis en oeuvre de façon alternative ou cumulative, aussi bien sur la totalité de l'image que sur des portions de l'image, pour déterminer les termes $t_i$ devant caractériser l'image.

Dans le cas d'un document contenant du texte, les termes $t_i$ peuvent être constitués par des mots du langage parlé ou écrit, par des nombres et par d'autres identificateurs constitués de combinaisons de caractères (par exemple des combinaisons de lettres et de chiffres).

On considèrera à nouveau l'indexation d'un document multimédia comportant des signaux vidéo, pour lequel on choisit des termes $t_i$ constitués par des images-clés représentant des groupes d'images homogènes consécutives, et on détermine des concepts $c_i$ par regroupement des termes $t_i$.

La détection des images clés repose sur le regroupement des images d'un document vidéo en groupes contenant chacun uniquement des images homogènes. De chacun des groupes on extrait une ou plusieurs images (appelées images clés) représentant le document vidéo.

Le regroupement des images du document vidéo repose sur la production d'un vecteur score appelé VS représentant le contenu de la vidéo, il caractérise la variation des images consécutives de la vidéo (l'élément $VS_i$ matérialise la différence entre le contenu de l'image d'indice i et celui de l'image d'indice i-1), VS est égal à zéro quand les contenus $im_i$ et $im_{i-1}$ sont identiques et il est important quand la différence entre les deux contenus est importante.

Pour calculer le signal VS, les trois bandes de chaque image $im_i$ RGB d'indice i de vidéo sont additionnées pour ne constituer qu'une seule image qu'appelée TRi. Ensuite, l'image TRi est décomposée en plusieurs bandes de fréquence pour ne conserver que la composante basse fréquence TRBi. On utilise pour cela deux filtres à miroir (un filtre Passe bas PB et un filtre Passe Haut PH) qui sont appliqués successivement sur les lignes et sur les colonnes de l'image. On considèrera deux types de filtre : l'ondelette de Haar et le filtre dont l'algorithme est le suivant :

Balayage ligne
A partir de TRk on produit l'image Bas
Pour chaque point $a_{2xi,j}$ de l'image TR faire
Calculer le point $b_{i,j}$ de l'image basse fréquence bas, $b_{i,j}$ prend la valeur médiane de $a_{2xi,j-1}$, $a_{2xi,j}$ et $a_{2x,j+1}$.

Balayage Colonne
A partir des deux images Bas on produit l'image TRBk
Pour chaque point $b_{i,2xj}$ de l'image TR faire
Calculer le point $bb_{i,j}$ de l'image basse fréquence bas, $bb_{i,j}$ prend la valeur médiane de $b_{i,2xj-1}$, $b_{i,2xj}$ et $b_{i,2xj+1}$

Les balayages ligne et colonne sont appliqués autant de fois qu'on le souhaite. Le nombre d'itérations dépend de la résolution des images de la vidéo. Pour des images de taille 512x512 ou peut fixer n à trois.

L'image résultat TRBi est projetée dans plusieurs directions pour obtenir un ensemble de vecteurs Vk, k est l'angle de projection (l'élément j de VO, vecteur obtenu suite à la projection horizontale de l'image, est égal à la somme de tous les points de la ligne j de l'image). Les vecteurs de directions de l'image TRBi sont comparés aux vecteurs de direction de TRBi-1 pour obtenir un score i qui mesure la similarité entre ces deux images. Ce score est obtenu par la moyenne de toutes les distances des vecteurs de même direction : pour chaque k on calcule la distance entre le vecteur Vk de l'image i et le vecteur Vk de l'image i-1 puis on calcule toutes ces distances.

L'ensemble de tous les scores constitue le vecteur score VS : l'élément i de VS mesure la similarité entre l'image TRBi et l'image TRBi-1. Le vecteur VS est lissé afin d'éliminer les irrégularités du au bruit engendré lors la manipulation de la vidéo.

On décrira ci-après un exemple de regroupement des images et d'extraction des images clés.

Le vecteur VS est analysé afin de déterminer les images clés qui correspondent aux maximums des valeurs de VS. Une image d'indice j est considérée comme une image-clé si la valeur VS(j) est un maximum et si VS(j) est situé entre deux minimums minG (minimum gauche) et minD (minimum droite) et si le minimum M1 tel que M1 = min (|VS(Cj)-minG|, |VS(j)-min D| est supérieur à un seuil donné.

Pour détecter les images-clés, on initialise minG avec VS(0) puis on parcourt le vecteur VS de la gauche vers la droite. A chaque étape, on détermine l'indice j correspondant à la valeur maximale située entre deux minimums (minG et minD) puis en fonction du résultat de l'équation définissant M1 on décide de considérer j comme un indice d'une image-clé ou non. Il est possible de prendre un groupe de plusieurs images-clés voisines, par exemple des images-clés d'indices j-1, j et j+1.

Trois cas se présentent si le minimum des deux pentes, définies par les deux minimums (minG et minD) et la valeur maximale, n'est pas supérieur au seuil :

i) Si IVS(j) - minGI est inférieur au seuil et que minG ne correspond pas à VS(o), le maximum VS(j) est ignoré et minD devient minG,

ii) Si |VS(j) - minG| est supérieur au seuil et si |VS(j)-minD| est inférieure au seuil, le minD et le maximum VS(j) sont conservés et minD est ignoré sauf si le plus proche maximum à droite de min D est supérieur à un seuil. Dans ce cas, on conserve aussi minD et on déclare j comme un indice d'une image-clé. Dans le cas où minD est ignoré, minD prendra la valeur la plus proche du minimum situé à droite de minD.

iii) Si les deux pentes sont inférieures au seuil, minG est conservé et minD et j sont ignorés.

Après sélection d'une image-clé, on itère le processus. A chaque itération minD devient minG.

Si l'on se reporte à nouveau à la Figure 1; à partir d'une base de termes 3 comprenant P termes, on procède dans une étape 4 à un traitement des termes $t_i$ et à leur regroupement en concepts $C_i$ (Figure 2) destinés à être stockés dans un dictionnaire de concepts 5. Il s'agit ici d'élaborer un ensemble de signatures caractérisant une classe de documents. Les signatures sont des descripteurs qui, par exemple dans le cas de l'image, représentent la couleur, la forme et la texture. Un document peut alors être caractérisé et représenté par les concepts du dictionnaire.

Une empreinte d'un document peut alors être formée par les vecteurs signatures de chaque concept du dictionnaire 5. Le vecteur signature est constitué par les documents où le concept $C_i$ est présent ainsi que par les positions et le poids de ce concept dans le document.

Les termes $t_i$ extraits d'une base de documents 1 sont stockés dans une base de termes 3 et traités dans un module 4 d'extraction de concepts $c_i$ qui sont eux-mêmes regroupés dans un dictionnaire de concepts 5. La Figure 2 illustre le processus de construction d'une base de concepts $c_i$ ($1 \leq i \leq m$) à partir de termes $t_j$ ($1 \leq j \leq n$) présentant des scores de similarité $wi_j$.

Le module de la production du dictionnaire de concepts reçoit en entrée l'ensemble P des termes de la base 3 et le nombre maximum N de concepts souhaité est fixé par l'utilisateur: Chaque concept $c_i$ est prévu pour regrouper tous les termes voisins du point de vue de leurs caractéristiques.

Pour produire le dictionnaire de concepts, on commence par calculer la matrice de distance *T* entre les termes de la base 3, cette matrice est utilisée pour créer une partition dont le cardinal est égal au nombre N de concepts souhaité.

La création du dictionnaire de concepts s'effectue en deux phases : Décomposition de *P* en *N* parties $P = P_1$ U $P_2$ ... U $P_N$

Processus d'optimisation de la partition qui décompose *P* en *M* classes $P = C_1$ U $C_2$ ... U $C_M$ avec *M* est inférieur ou égal à *P*.

Le processus d'optimisation a pour but de réduire l'erreur de la répartition de *P* en *N* parties $\{P_1, P_2, ..., P_N\}$ où chaque partie $P_i$ est représentée par le terme $t_i$ qui sera pris comme concept, l'erreur commise est alors égale à l'expression suivante :

$$\varepsilon = \sum_{i=1}^{N} \varepsilon_{t_i} \; , \quad \varepsilon_{t_i} = \sum_{t_j \in P_i} d^2\left(t_i, t_j\right)$$

est l'erreur commise lorsqu'on remplace les termes $t_j$ de $P_i$ par $t_i$.

On peut décomposer P en N parties de manière à répartir les termes de telle façon que les termes les plus éloignés se trouvent dans des parties distinctes et les termes proches se trouvent dans la même partie.

On décrira d'abord l'étape 1 de décomposition de l'ensemble de termes P en deux parties P$_1$ et P$_2$ :

(a) On détermine les deux termes les plus éloignés $t_i$ et $t_j$ de *P* correspondant à la plus grande distance D$_{ij}$ de la matrice *T*.

(b) Pour chaque $t_k$ de *P*, $t_k$ est affecté à $P_1$ si la distance D$_{ki}$ est plus petite que la distance D$_{kj}$ et à $P_2$ sinon.

On itère l'étape 1 jusqu'à l'obtention du nombre de parties souhaité et à chaque itération on applique les étapes (a) et (b) sur les termes de l'ensemble P1 et de l'ensemble P2.

On décrira maintenant une phase d'optimisation.

Le processus d'optimisation a pour point de départ les N parties disjointes de P $\{P_1, P_2, ..., P_N\}$ ainsi que les N termes $\{t_1, t_2, ..., t_N\}$ qui les représentent et il est utilisé afin de réduire l'erreur de décomposition de P en $\{P_1, P_2, ..., P_N\}$ parties.

On commence par calculer les centres de gravités Ci des Pi. Ensuite on calcule l'erreur $\varepsilon c_i = \sum_{t_j \in P_i} d^2\left(t_i, t_j\right)$ qu'on compare à $\varepsilon c_i$ et on remplace ti par Ci si $\varepsilon c_i$ est inférieur à $\varepsilon t_i$. Puis, après avoir calculé la nouvelle matrice T et si la convergence n'est pas atteinte , on procède à une décomposition. La condition d'arrêt est définie par $\dfrac{(\varepsilon c_t - \dot{\varepsilon c}_{t+1})}{\varepsilon c_t}$

< *seuil* qui est de l'ordre de $10^{-3}$. $\varepsilon c_t$ étant l'erreur commise à l'instant t qui représente l'itération.

On présente ci-dessous une matrice T de distances entre les termes, où $D_{ij}$ désigne la distance entre le terme $t_i$ et le terme $t_j$.

|  | $t_0$ |  | $t_i$ |  | $t_k$ |  | $t_j$ |  | $t_n$ |
|---|---|---|---|---|---|---|---|---|---|
| $t_0$ | $D_{00}$ |  | $D_{0i}$ |  | $D_{0k}$ |  | $D_{0j}$ |  | $D_{0n}$ |
|  |  |  |  |  |  |  |  |  |  |
| $t_i$ | $D_{i0}$ |  | $D_{ii}$ |  | $D_{ik}$ |  | $D_{ij}$ |  | $D_{in}$ |
|  |  |  |  |  |  |  |  |  |  |
| $t_k$ | $D_{k0}$ |  | $D_{ki}$ |  | $D_{kk}$ |  | $D_{ki}$ |  | $D_{kn}$ |
|  |  |  |  |  |  |  |  |  |  |
| $t_i$ | $D_{j0}$ |  | $D_{ji}$ |  | $D_{ik}$ |  | $D_{ii}$ |  | $D_{in}$ |
|  |  |  |  |  |  |  |  |  |  |
| $t_n$ | $D_{n0}$ |  | $D_{ni}$ |  | $D_{nk}$ |  | $D_{ni}$ |  | $D_{nn}$ |

La Figure 3 illustre, dans le cas de documents multimédias de contenus divers, un exemple de structuration du dictionnaire de concept 5.

Afin de faciliter la navigation à l'intérieur du dictionnaire 5 et de déterminer rapidement lors d'une phase d'identification le concept le plus proche d'un terme donné, le dictionnaire 5 est analysé et une carte de navigation 9 à l'intérieur du dictionnaire est établie.

La production de la carte de navigation 9 s'effectue de façon itérative. A chaque itération, on commence par scinder l'ensemble de concepts en deux sous-ensembles, puis à chaque itération on sélectionne un sous-ensemble jusqu'à l'obtention du nombre de groupes souhaité ou bien jusqu'à ce que le critère d'arrêt soit satisfait. Ce critère d'arrêt peut être par exemple que les sous-ensembles obtenus sont tous homogènes avec un écart-type faible par exemple. Le résultat final est un arbre binaire où les feuilles contiennent les concepts du dictionnaire et les noeuds de l'arbre contiennent les informations nécessaires à la scrutation de l'arbre lors de la phase d'identification d'un document.

On décrira ci-dessous un exemple de module 6 de répartition d'un ensemble de concepts.

L'ensemble de concepts C est représenté sous la forme d'une matrice $M = [c_1, c_2, ..., c_N] \in \Re^{p*N}$ , avec $c_i \in \Re^p$ , où $c_i$ représente un concept de *p* valeurs. Différentes méthodes sont possibles pour assurer une répartition axiale. Dans ce cas, on commence par calculer le centre de gravité C ainsi que l'axe utilisé pour décomposer l'ensemble en deux sous-ensembles.

Les étapes de traitement sont les suivantes :

Étape 1 : on calcule un représentant de la matrice M tel que le centroïde *w* de la matrice

$$M : \quad w = \frac{1}{N} \sum_{i=1}^{N} c_i \qquad\qquad (13)$$

Étape 2 : on calcule la matrice de covariance $\tilde{M}$ entre les éléments de la matrice M et le représentant de la matrice M avec, dans le cas particulier ci-dessus

$$\tilde{M} = M - we, \text{ où } e = [1,1,1,...,1] \qquad\qquad (14)$$

Étape 3 : on calcule un axe de projection des éléments de la matrice M, par exemple le vecteur propre U associé à la plus grande valeur propre de la matrice de covariance.

Étape 4: on calcule la valeur pi = $u^T(c_i\text{-}w)$ et on décompose l'ensemble de concepts C en deux sous-ensembles C1 et C2 de la manière suivante :

$$\begin{cases} c_i \in C1 \;\; si \;\; p\mathrm{i} \leq 0 \\ c_i \in C2 \;\; si \;\; p\mathrm{i} > 0 \end{cases} \qquad\qquad (15)$$

.

Les informations stockées dans le noeud associé à C sont {u, w, |p1|, p2} avec p1 est le maximum de tous les $p$i $\leq 0$ et p2 est le minimum de tous les $p$i > 0.

L'ensemble {u, w, |p1|, p2} constitue les indicateurs de navigation dans le dictionnaire de concept. En effet pour déterminer, lors de la phase d'identification par exemple, le concept le plus proche d'un terme ti, on calcule la valeur pti = $u^T$ ($t_i$-w) puis on sélectionne le noeud associé à C1 si $\|pti\|\text{-}\|p1\| < \|pti\| \text{-} p_2\|$ et on sélectionne le noeud C2 si non. On itère le processus jusqu'à ce que l'on ait atteint une des feuilles de l'arbre.

Un module détecteur de singularité 8 peut être associé au module 6 de répartition des concepts.

Ce détecteur de singularité permet de sélectionner l'ensemble Ci à décomposer. Une des méthodes possibles consiste à sélectionner l'ensemble le moins compact.

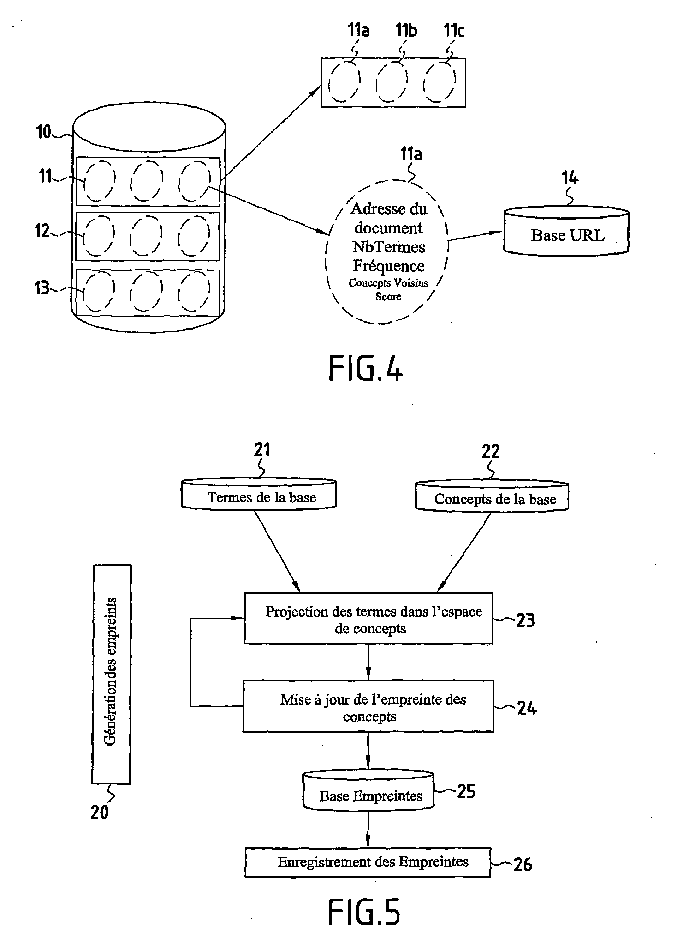

Les Figures 4 et 5 illustrent l'indexation d'un document ou d'une base de documents et la construction d'une base d'empreintes 10.

La base d'empreintes 10 est constituée de l'ensemble des concepts représentant les termes des documents à protéger. A chaque concept Ci de la base d'empreintes 10 est associée une empreinte 11, 12, 13 constituée par un ensemble d'informations telles que le nombre de termes dans les documents où le concept est présent, et pour chacun de ces documents on enregistre une empreinte 11a, 11b, 11c comprenant l'indice du document qui renvoie à l'adresse du document, le nombre de termes, le nombre d'occurrences du concept (fréquence), le score, ainsi que les concepts qui lui sont voisins dans le document. Le score est une valeur moyenne des mesures de similarité entre le concept et les termes du document qui sont les plus proches du concept. L'indice d'un document donné qui renvoie à l'adresse de ce document est stocké dans une base 14 des adresses des documents protégés.

Le processus 20 de génération des empreintes ou signatures de documents à indexer est illustré sur la Figure 5.

Lors de l'enregistrement d'un document, on extrait les termes pertinents du document (étape 21) et on prend en compte le dictionnaire des concepts (étape 22). Chacun des termes $t_i$ du document est projeté dans l'espace du dictionnaire de concepts afin de déterminer le concept $C_i$ représentant le terme $t_i$ (étape 23).

On met ensuite à jour l'empreinte du concept $C_i$ (étape 24). Cette mise à jour s'effectue selon que le concept a déjà été rencontré, c'est-à-dire est présent dans les documents qui sont déjà enregistrés ou non.

Si le concept $C_i$ n'est pas encore présent dans la base, on crée une nouvelle entrée dans la base (une entrée dans la base correspond à un objet dont les éléments sont des objets contenant la signature du concept dans les documents où ce concept est présent). On initialise l'entrée créée avec la signature du concept. La signature d'un concept dans un document est matérialisée principalement par les informations suivantes : Adresse du document, NbTermes, Fréquence, Concepts Voisins et score.

Si le concept $C_i$ existe dans la base, on ajoute à l'entrée associée au concept sa signature dans le document qui est composée de (Adresse du document, NbTermes, Fréquence, Concepts Voisins et score).

Lorsque la base d'empreintes est construite (étape 25), on procède à l'enregistrement de la base d'empreintes (étape 26).

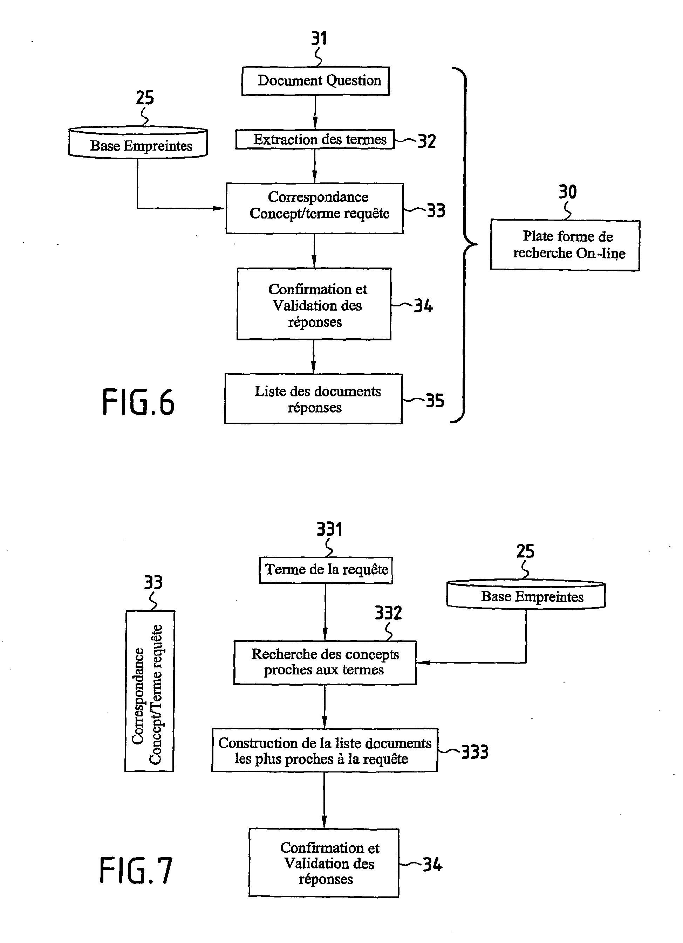

La Figure 6 illustre un processus d'identification d'un document qui est implémenté sur une plate-forme 30 de recherche en ligne.

L'identification d'un document a pour objectif de déterminer si un document posé comme question est la réutilisation d'un document de la base. Elle est basée sur la mesure de similarité entre documents. Le but est d'identifier les documents contenant des éléments protégés. La reprise peut être totale ou partielle. Dans ce dernier cas, l'élément copie a subi des modifications telles que : suppression de phrases dans un texte, suppression de motif dans une image, suppression de plan ou de séquence dans un document vidéo,... changement d'ordre des termes ou substitution de termes par d'autres termes dans un texte.

Après présentation d'un document à identifier (étape 31), on procède à l'extraction des termes de ce document (étape 32).

En liaison avec une base d'empreintes (étape 25), on met en correspondance les concepts calculés à partir des termes extraits de la question, avec les concepts de base (étape 33), afin d'établir une liste de documents ayant des contenus similaires aux contenus du document question.

Le processus d'établissement de la liste est le suivant :

On note $p_{dj}$ : le degré de ressemblance du document dj au document question, avec $1 \leq j \leq N$, N est le nombre de documents de la base de référence

On initialise à zéro tous les $p_{dj}$

Pour chaque terme ti de la question fourni à l'étape 331 (Figure 7) on détermine le concept Ci qui le représente (étape 332).

Pour chaque document dj où le concept est présent on met à jour son $p_{dj}$ de la manière suivante :

pdj =$p_{dj}$ +f(frequence,score), plusieurs fonctions f peuvent être utilisées par exemple f(fréquence, score)= fréquence $\times$ score, fréquence désigne le nombre d'occurrences du concept Ci dans le document dj et score désigne la moyenne des scores de ressemblance des termes du document dj avec le concept Cj.

On ordonne les $p_{dj}$ et on conserve ceux qui sont supérieurs à un seuil donné (étape 333). On procède ensuite à une confirmation et une validation des réponses (étape 34).

Confirmation des réponses : la liste des réponses est filtrée afin de n'en garder que les réponses les plus pertinentes. Le filtrage utilisé est basé sur la corrélation entre les termes de la question et de chacune des réponses.

Validation: elle permet de ne conserver que les réponses où il y a une grande certitude de reprise de contenu. Dans cette étape les réponses sont filtrées en tenant compte des propriétés algébriques et topologiques des concepts à l'intérieur d'un document : on exige que le voisinage dans le document question soit respecté dans les documents réponses, c'est à dire que deux concepts voisins dans le document question doivent être voisins dans le document réponse.

On fournit alors la liste des documents réponses (étape 35).

On considèrera maintenant plus particulièrement le cas de documents multimédias contenant des images.

On décrira en particulier pour la construction de la base d'empreintes qui servira d'outil pour l'identification d'un document, des procédés rapides et efficaces d'identification d'images qui tiennent compte de toutes les informations pertinentes contenues dans les images allant de la caractérisation des structures ou objets qui la composent, à celle des zones texturées et à la couleur de fond. Les objets de l'image sont identifiés par la production d'une table résumant différentes statistiques faites sur des informations des zones frontières des objets ainsi que des informations sur les voisinages de ces zones frontières. La caractérisation des zones texturées peut être effectuée à l'aide d'une description très fine à la fois spatiale et spectrale de la texture suivant trois caractéristiques fondamentales qui sont sa périodicité, son orientation globale et l'aspect aléatoire de son motif. La texture est ici assimilée à une réalisation de processus aléatoire bidimensionnel. La caractérisation de la couleur est un volet important de la méthode. Elle peut être utilisée comme un premier tri des réponses similaires basées sur la couleur, ou alors une dernière, décision faite pour affiner la recherche.

Dans le premier volet de la phase de construction d'empreintes, on prend en compte des informations classifiées sous forme de composants appartenant à deux grandes catégories :

- les composants dits structurels qui décrivent la perception par l'oeil d'un objet pouvant être isolé ou d'un ensemble d'objets disposé selon un arrangement spatial (images 81 et 82 des Figures 11 et 12),
- les composants dits texturaux qui sont le complément des composants structurels et qui traduisent la régularité ou l'homogénéité des motifs de texture (images 82 et 83 des Figures 12 et 13).

La Figure 11 montre ainsi une image 81 contenant des éléments structurels et ne présentant pas de motifs de texture.

La Figure 12 montre une image 81 contenant des éléments structurels et un fond texture.

La Figure 13 montre une image 83 sans éléments structurels mais entièrement texturée.

Comme indiqué plus haut, lors de la phase de construction d'empreintes, chaque document de la base de documents est analysé afin d'en extraire les informations pertinentes. Ces informations seront ensuite répertoriées et analysées. Cette analyse se fait suivant un enchaînement de procédures qui se résume en trois étapes :

- Extraction pour chaque document de caractéristiques prédéfinies et stockage de ces informations dans un vecteur appelé terme.
- Regroupement dans un concept de tous les termes "voisins" du point de vue de leurs caractéristiques, ce qui permet de rendre la recherche plus concise.
- Construction d'une empreinte qui caractérise ce document par un nombre réduit d'entités. Chaque document est ainsi associé à une empreinte qui lui est propre.

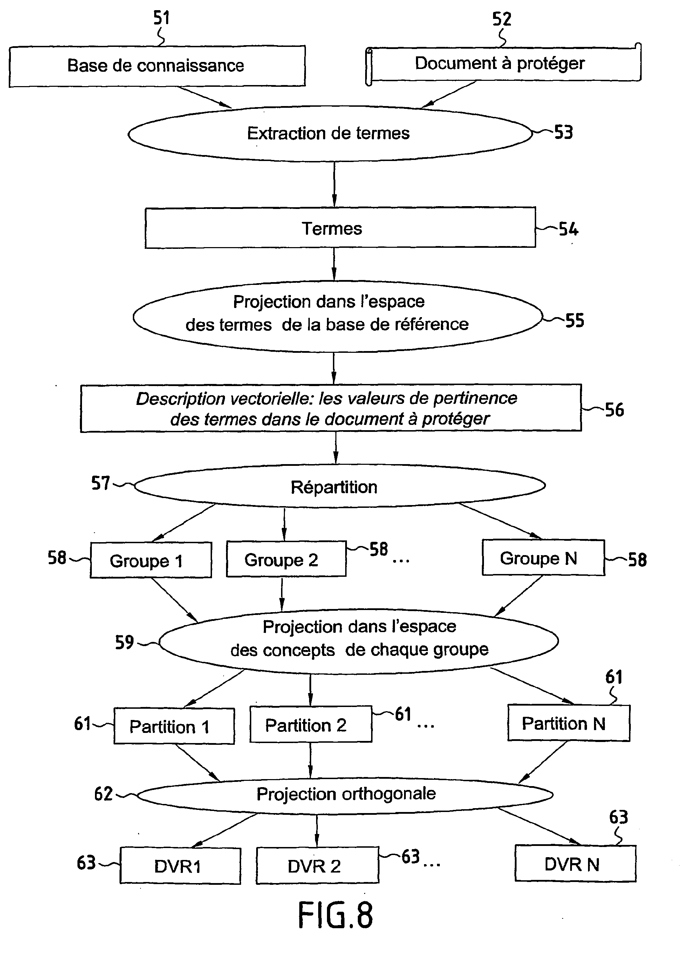

La Figure 8 illustre le cas de l'indexation d'un document image 52 contenu dans une base d'images 51 préalablement enregistrée, pour caractériser cette image 52 par un nombre fini de paramètres pouvant être facilement stockés et manipulés ultérieurement. On procède à l'étape 53 à l'extraction de termes du document à chercher qui sont stockés dans une mémoire tampon (étape 54).

On opère à l'étape 55 une projection dans l'espace des termes de la base de références.

A l'étape 56, on procède à une description vectorielle donnant les valeurs de pertinence des termes dans le document à chercher.

L'étape 57 consiste en une répartition des termes dans N groupes 58 de concepts.

L'étape 59 consiste en une projection dans l'espace des concepts de chaque groupe 58 pour obtenir N partitions 61.

Enfin, une projection orthogonale 62 conduit à N ensembles 63 de descriptions vectorielles réduites.

Lors d'une phase ultérieure de recherche, suite à une requête formulée par un utilisateur, par exemple l'identification d'une image question, on recherche tous les documents multimédias similaires ou répondant à cette requête. Pour ce faire, comme indiqué plus haut, on calcule les termes du document question et on les compare aux concepts de la base afin de déduire le ou les documents de la base qui sont similaires au document question.

On décrira ci-dessous de façon plus détaillée la phase de construction des termes d'une image.

La phase de construction des termes d'une image met en oeuvre utilement la caractérisation des supports structurels de l'image. Les supports structurels sont les éléments qui composent la scène de l'image. Les plus significatifs sont ceux qui délimitent les objets de la scène car ce sont eux qui caractérisent les différentes formes qui sont perçues lorsqu'on observe une quelconque image.

Cette étape concerne l'extraction de ces supports structurels. Elle consiste en un démantèlement des zones frontières des objets de l'image, qui sont caractérisées par des endroits entre deux zones où de fortes variations d'intensité sont observées. Ce démantèlement s'opère par un procédé qui consiste à répartir ces zones frontières parmi différentes *« classes »* selon l'orientation locale du gradient de l'image (orientation de la variation locale d'intensité). On obtient ainsi une multitude de petits éléments dénommés les *« Eléments de Support structurels »* (*ESS*). Chaque *ESS* appartenant effectivement à un contour d'une scène est caractérisé par une similarité au niveau de l'orientation locale de son gradient. Ceci est une première étape qui vise à répertorier tous *les éléments de Support structurels* de l'image.

La démarche suivante s'opère désormais à partir de *ces ESS,* à savoir la construction de *termes* décrivant les propriétés locales et globales des *ESS*.

Sont considérées comme propriétés locales les informations extraites de chaque support. Deux types de supports peuvent être distingués : les éléments de droites rectilignes (EDR) et les éléments d'arcs de courbes (EAC).

Les éléments de droites rectilignes EDR sont caractérisés par les propriétés locales qui sont:

■ La dimension (longueur, largeur)

■ Direction principale (pente)

■ Propriétés statistiques des pixels constituant le support (valeur moyenne d'énergie, les moments)

■ Informations du voisinage (Transformée de Fourier locale)

Les éléments d'arcs de courbes EAC quant à eux sont caractérisés de la même façon que précédemment, en plus de la courbure des arcs.

Les propriétés globales englobent les statistiques telles que le nombre de chaque type de supports et leurs dispositions spatiales (associations géométriques entre les supports : connexités, gauche, droite, milieux...).

En résumé, pour une image donnée, les informations pertinentes extraites des objets la constituant sont regroupées sur le tableau 1.

Tableau 1

| Supports structuraux des objets d'une image | | Type | | |
|---|---|---|---|---|
| | | ESS | EDR | EAC |
| **Propriétés globales** | *Nb total* | *n* | $n_1$ | $n_2$ |
| | *Nb longs (> seuil)* | *nl* | $n_1l$ | $n_2l$ |
| | *Nb courts (< seuil)* | *nc* | $n_1c$ | $n_2c$ |
| | *Nb de supports longs à une connexion gauche ou droites* | _ | $n_11gdx$ | $n_21gdx$ |
| | *Nb d'une connexion milieu* | - | $n_11gdx$ | $n_21gdx$ |
| | *Nb de supports longs parallèles* | - | $n_1pll$ | $n_2pll$ |
| **Propriétés locales** | *Luminance (>seuil)* | - | | |
| | *Luminance (<seuil)* | - | | |
| | *Pente* | - | | |
| | *Courbure* | - | | |
| | *Caractérisation du voisinage des supports* | - | | |

La phase de construction des termes d'une image met en oeuvre également la caractérisation des informations texturales pertinentes de l'image. Les informations venant de la texture de l'image sont divisées selon trois aspects visuels de l'image :

■ l'aspect aléatoire (comme une image de sable fin, ou d'herbe) où aucun arrangement particulier ne peut être décelé,
■ l'aspect périodique (comme un pull en jacquard) où une répétition de motifs (pixel ou groupement de pixels) dominants est observée,
■ et enfin l'aspect directionnel où les motifs tendent globalement à s'orienter vers une ou des directions privilégiées.

Ces informations sont obtenues en approchant l'image par des modèles ou représentations paramétriques. Chaque aspect est pris en compte par ses représentations spatiale et spectrale qui constituent les informations pertinentes de cette partie de l'image. La périodicité et l'orientation sont caractérisées par les supports spectraux tandis que l'aspect aléatoire se traduit par l'estimation des paramètres d'un modèle autorégressif bidimensionnel.
Une fois toutes les informations pertinentes extraites, on peut procéder à la structuration des termes des textures.

Tableau 2

| Supports spectraux et paramètres autorégressifs de la texture d'une image | | |
|---|---|---|
| **Composante périodique** | *Nb total d'éléments périodiques* | *np* |
| | *Fréquences* | *Couple* $(\omega_p, v_p), 0 < p \le np$ |
| | *Amplitudes* | *Couple* $(C_p, D_p), 0 < p \le np$ |
| **Composante directionnelle** | *Nb total d'éléments directionnels.* | *nd* |
| | *Orientations* | *Couple* $(\alpha_i, \beta_i), 0 < i \le nd$ |
| | *Fréquences* | $v_i, 0 < i \le nd$ |
| **Composantes aléatoires** | *Ecart-type du bruit* | $\sigma$ |
| | *Paramètres autorégressifs* | $\{a_{i,j}\}, (i, j) \in S_{N,M}$ |

La phase de construction des termes d'une image peut enfin mettre également en oeuvre la caractérisation de la couleur de l'image.
La couleur est souvent représentée par les histogrammes de couleur, ces derniers sont invariants à la rotation et robustes contre l'occlusion et les changements de points de vue de la caméra.
La quantification des couleurs peut se faire dans l'espace RVB (Rouge, Vert, Bleu), TSV (Teinte Saturation Valeur), ou l'espace LUV mais la méthode d'indexation par les histogrammes de couleurs a prouvé ses limites car elle donne une information globale de l'image, et lors de l'indexation on peut trouver des images ayant le même histogramme de couleur, mais qui sont complètement différentes.

Beaucoup d'auteurs proposent des histogrammes de couleurs en intégrant l'information spatiale. Ceci consiste par exemple à distinguer les pixels cohérents des pixels incohérents, un pixel est cohérent s'il appartient à une région assez large regroupant des pixels identiques,il est classé incohérent s'il fait partie d'une région de taille réduite.

On décrira plus loin un procédé de caractérisation de la distribution spatiale des constituants de l'image (par exemple la couleur) qui est moins coûteux en temps de calcul que les méthodes citées ci dessus, et est robuste aux rotations et à la translation.

Les différentes caractéristiques extraites des éléments de support structurels ainsi que les paramètres des composants périodique, directionnel et aléatoire du champ de texture ainsi que les paramètres de la distribution spatiale des constituants de l'image constituent les *termes* pouvant servir à la description du contenu d'un document. Ces termes sont regroupés dans des *concepts* afin de réduire *les informations utiles* d'un document.

Les occurrences de ces concepts ainsi que leurs positions et leurs fréquences constituent ce qu'on appelle *l'empreinte* d'un document. Ces empreintes vont ensuite servir de trait d'union entre un document question et les documents d'une base, lors d'une phase de recherche de document.

Une image ne contient pas forcément tous les éléments et les caractéristiques décrits plus haut. Par conséquent, identifier une image commence par la détection de la présence de ses éléments constituants.

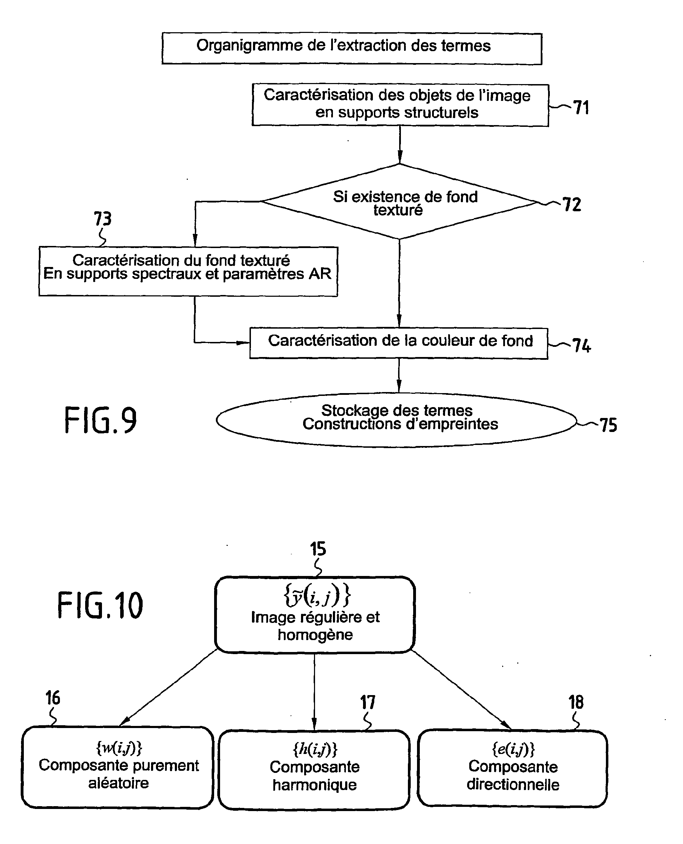

La Figure 9 montre un exemple d'organigramme d'un processus d'extraction des termes d'une image avec une première étape 71 de caractérisation des objets de l'image en supports structurels, qui peut le cas échéant être précédé d'un test de détection d'éléments structurels permettant d'omettre cette étape 71 dans les cas où les éléments structurels sont absents.

L'étape 72 consiste en un test pour déterminer s'il existe un fond texture. Si c'est le cas, on passe à une étape 73 de caractérisation du fond texturé en supports spectraux et paramètres autorégressifs AR, puis à une étape 74 de caractérisation de la couleur de fond.

S'il n'existe pas de fond structuré, on passe directement de l'étape 72 à l'étape 74.

Enfin, une étape 75 réside dans le stockage des termes et la construction d'empreintes.

On reviendra maintenant de façon plus détaillée sur la caractérisation des éléments de support structurels d'une image.

Le principe de base de cette caractérisation consiste en un démantèlement des zones frontières des objets de l'image en multitudes de petits éléments de base appelés *éléments de supports significatifs* (*ESS*) qui véhiculent les *informations utiles* des zones frontières qui sont composées de bandes linéaires de taille variable, ou des coudes de différentes courbures. Des statistiques faites sur ces objets seront alors analysées et utilisées pour construire *les termes de ces supports structures.*

Afin de décrire plus rigoureusement les principaux procédés composant cette approche, on notera une image numérisée par l'ensemble {$y(i,j)$, $(i,j) \in I \times J$}, où $I$ et $J$ sont respectivement le nombre de lignes et de colonnes de l'image.

A partir des images *gradient vertical* {$g_v(i,j),(i,j) \in I \times J$}et *horizontal* {$g_h(i,j),(i,j) \in I \times J$} préalablement calculées, cette approche consiste à partitionner l'image selon l'orientation locale de son gradient en un nombre fini de classes équidistantes. L'image contenant l'orientation du gradient est définie par la formule :

$$O(i,j) = \arctan\left(\frac{g_h(i,j)}{g_v(i,j)}\right) \qquad (1)$$

La partition n'est autre qu'une subdivision angulaire du plan 2D (de 0˚ à 360˚) par un pas de discrétisation bien défini. Le fait d'utiliser l'orientation locale du gradient comme critère de décomposition des zones frontières permet un meilleur groupement des pixels faisant partie d'une même zone frontière. Afin de résoudre le problème des points frontières qui peuvent être partagés entre deux *classes* juxtaposées, une deuxième partition avec le même nombre de *classes* que précédemment, mais décalées de ½ *classe* est utilisée. A partir des classes issues des deux partitions, une simple procédure consiste à choisir celles qui totalisent le plus grand nombre de pixels. En effet, chaque pixel appartient à deux *classes* chacune issue des deux partitions. Sachant que chaque pixel est un élément potentiel d'un éventuel *ESS,* il vote alors pour la classe qui contient le plus de pixels parmi les deux. Il s'agit d'une région où la probabilité de trouver un *ESS* de taille plus élevée est la plus forte possible. A la suite des votes, on retient uniquement *les classes* qui totalisent plus de 50% des suffrages. Ce sont les *régions de support* susceptibles de contenir les *ESS.*

A partir de ces *régions de support,* on détermine les *ESS,* on les répertorie selon certains critères qui peuvent être :

■ La longueur (on détermine pour cela un seuil *Io* et on comptabilise les *ESS* inférieurs et supérieurs à ce seuil)
■ L'intensité définie par la moyenne du module du gradient des pixels composant chaque *ESS.* ( un seuil noté *I0* est alors défini, on répertorie ceux qui sont inférieurs et supérieurs à ce seuil).
■ Le contraste défini par la différence entre le maximum et le minimum des pixels.

A cette étape du procédé, tous les éléments dits structurels sont connus et répertoriés conformément aux types de supports structurels pré-identifiés. Ils peuvent être extraits de l'image d'origine pour laisser place à la caractérisation du champ de textures.

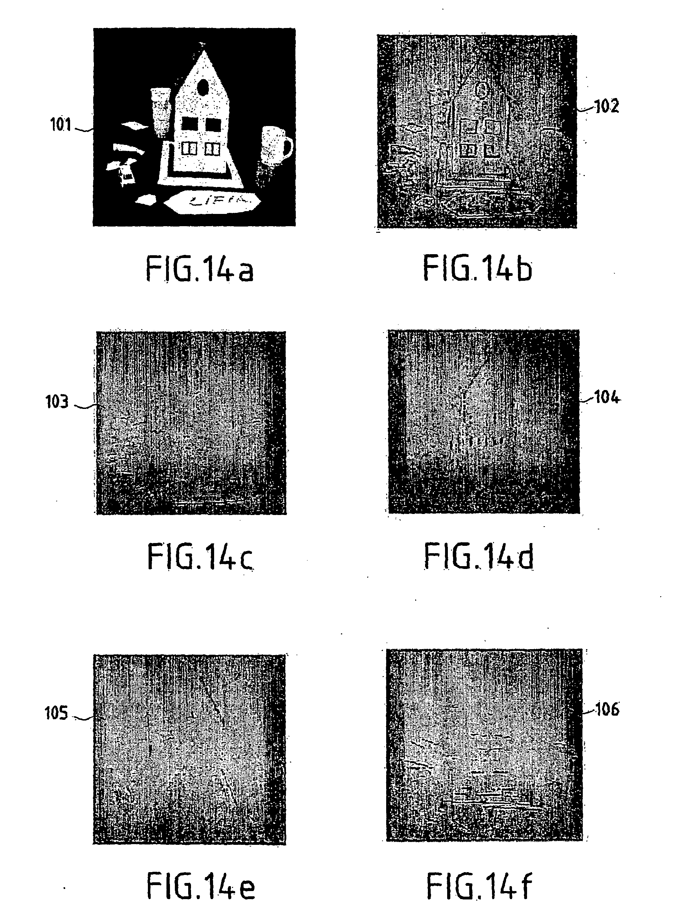

A titre d'exemple, considérons l'image 81 de la Figure 11, reprise comme image 101 de la Figure 14a, les zones frontières sont illustrées sur l'image 102 de la Figure 14b. Les éléments de ces zones frontières sont ensuite démantelés et répartis selon l'orientation de leur gradient parmi différentes classes représentées par les images 103 à 106 des Figures 14c à 14f.. Ces différents éléments constituent les éléments de supports significatifs, et leurs analyses statistiques permettent de construire *les termes* du composant structurel.

Dans le cas des Figures 14c à 14f, à titre d'exemple, l'image 103 correspond à une classe 0 (0˚ - 45˚), l'image 104 correspond à une classe 1 (45˚ - 90˚), l'image 105 correspond à une classe 2 (90˚ - 135˚) et l'image 106 correspond à une classe 3 (135˚ - 180˚):

En l'absence d'éléments structurels, on suppose que l'image est texturée avec des motifs plus ou moins réguliers et on procède à une caractérisation du champ de la texture. Pour cela, on peut procéder à une décomposition de l'image en trois composantes qui sont :

■ Une composante texturale contenant les informations anarchiques ou aléatoires (comme une image de sable fin, ou d'herbe) où aucun arrangement particulier ne peut être décelé,
■ Une composante périodique (comme un pull en jacquard) où une répétition de motifs dominants est observée,
■ et enfin une composante directionnelle où les motifs tendent globalement vers une ou des directions privilégiées.

L'objectif étant de caractériser parfaitement la texture de l'image à partir d'un ensemble de paramètres, ces trois composantes sont représentées par des modèles paramétriques.

Ainsi, la texture de l'image 15 régulière et homogène notée $\{\tilde{y}(i,j),(i,j)\in I\times J\}$ est décomposée en trois composantes 16, 17, 18 comme illustré sur la Figure 10, conformément à la relation suivante :

$$\{\tilde{y}(i,j)\} = \{w(i,j)\} + \{h(i,j)\} + \{e(i,j)\}. \tag{16}$$

Où $\{w(i,j)\}$ est la composante purement aléatoire 16, $\{h_{(i,j)}\}$ est la composante harmonique 17 et $\{e(i,j)\}$ la composante directionnelle 18. L'estimation des paramètres de ces trois composantes 16, 17, 18 termine cette étape d'extraction d'informations d'un document. Des méthodes d'estimation sont décrites dans les paragraphes suivants.

On décrira d'abord un exemple de procédé de détection et caractérisation de la composante directionnelle de l'image.

Il s'agit dans un premier temps d'appliquer un modèle paramétrique à la composante directionnelle $\{e(i,j)\}$. Elle est constituée d'une somme dénombrable d'éléments directionnels où chacun est associé à un couple d'entiers $(\alpha, \beta)$ définissant une orientation d'angle $\theta$ tel que $\theta = \tan^{-1} \beta/\alpha$. Autrement dit, $e(i, j)$ est défini par $e(i,j) = \sum_{(\alpha,\beta)\in O} e_{(\alpha,\beta)}(i,j)$

où chaque $e_{(\alpha,\beta)}(i,j)$ est défini par :

$$e_{(\alpha,\beta)}(i,j) = \sum_{k=1}^{Ne} \left[ s_k^{\alpha,\beta}(i\alpha - j\beta) \times \cos\left(2\pi \frac{v_k}{\alpha^2 + \beta^2}(i\beta + j\alpha)\right) + t_k^{\alpha,\beta}(i\alpha - j\beta) \times \sin\left(2\pi \frac{v_k}{\alpha^2 + \beta^2}(i\beta + j\alpha)\right) \right] \tag{17}$$

où

• Ne est le nombre d'éléments directionnels associés à $(\alpha,\beta)$,
• $v_k$ est la fréquence du $k^{\text{ième}}$ élément,

- $\{s_k(i\alpha - j\beta)\}$ et $\{t_k(i\alpha - j\beta)\}$ sont les amplitudes.

La composante directionnelle $\{e(i,j)\}$ est ainsi parfaitement définie par la connaissance des paramètres contenus dans le vecteur $E$ suivant :

$$E = \left\{\alpha_l, \beta_l, \left\{\nu_{lk}, s_{lk}(c), t_{lk}(c)\right\}_{lk=1}^{N_e}\right\}_{(\alpha_l, \beta_l) \in O} \tag{18}$$

Pour estimer ces paramètres, on utilise le fait que la composante directionnelle d'une image est représentée dans le domaine spectral par un ensemble de droites de pentes orthogonales à celles définies par les couples d'entiers $(\alpha_l, \beta_l)$ du modèle qui seront notés $(\alpha_l, \beta_l)^\perp$. Ces droites peuvent être décomposées en un sous ensemble de droites de même pente associé chacun à un élément directionnel.

A titre d'illustration, les Figures 15a et 15b montrent des images 84, 86 contenant un élément directionnel et la Figure 15c montre une image 88 contenant deux éléments directionnels.

La figure 15a1 montre une vue 85 en trois dimensions du spectre de l'image 84 de la Figure 15a.

Les Figures 15b1 et 15c1 montrent des images module de Fourier 87, 89 respectivement des images 86 et 85 des Figures 15b et 15c.

Pour calculer les éléments du vecteur $E$, on peut adopter une approche fondée sur la projection de l'image suivant différentes directions. Le procédé consiste dans un premier temps à s'assurer de la présence de la composante directionnelle avant d'estimer ses paramètres.

La détection de la composante directionnelle de l'image est basée sur la connaissance des propriétés spectrales de celle-ci. Si on assimile le spectre de l'image à une image 3D (X, Y, Z), où (X,Y) représentent les coordonnées des pixels et Z l'amplitude, les droites qu'on cherche à détecter sont représentées par un ensemble de pics concentrés le long de droites dont les pentes sont définies par les couples $(\alpha_l, \beta_l)$ recherchés (cf. figure 15a1). Pour déterminer la présence de ces droites, il suffit de comptabiliser les pics prédominants. Le nombre de ces pics renseigne sur la présence ou non de supports directionnels ou harmoniques.

On décrira maintenant un exemple de procédé de caractérisation de la composante directionnelle. Pour cela, on procède au calcul des couples de direction $(\alpha_l, \beta_l)$ et à la détermination du nombre d'éléments directionnels.

On effectue d'abord le calcul de la transformée de Fourier Discrète (TFD) de l'image suivi d'une estimation des droites de pente rationnelle observées dans l'image transformée $\Psi_{(i,j)}$.

Pour cela, on définit un ensemble de projections qui discrétise le domaine fréquentiel en différents angles de projection $\theta_k$, $k$ fini. Cet ensemble de projection peut être obtenu de différentes manières. On peut par exemple chercher tous couples d'entiers premiers entre eux $(\alpha_k, \beta_k)$ définissant un angle $\theta_k$, tel que $\theta_k = \tan^{-1}\dfrac{\alpha_k}{\beta_k}$ où $0 \le \theta_k \le \dfrac{\pi}{2}$.

Un ordre $r$ tel que $0 \le \alpha_k, \beta_k \le r$ permet de contrôler le nombre de projections. Les propriétés de symétrie peuvent ensuite être utilisées pour obtenir tous les couples jusqu'à $2\pi$. Ces couples sont illustrés sur la Figure 16 pour $0 \le \alpha_k, \beta_{k \le 3}$.

Des projections du module de la TFD de l'image sont effectuées suivant les $\theta_k$. Chaque projection engendre un vecteur de dimension 1, $V(\alpha_k, \beta_k)$, noté $V_k$ pour simplifier la notation, qui contient les informations directionnelles recherchées.

Chaque projection $V_k$ est donnée par la formule :

$$V_k(n) = \sum_\tau \Psi(i + \tau\beta_k, j + \tau\alpha_k), \quad 0 < i + \tau\beta_k < I-1, 0 < j + \tau\alpha_k < J-1 \tag{19}$$

avec $n = -i * \beta_k + j * \alpha_k$ et $0 \le |n| < N_k$ et $N_k = |\alpha_k|(T-1) + |\beta_k|(L-1) + 1$, où $T*L$ est la taille de l'image. $\Psi(i,j)$ est le module de transformée de Fourier de l'image à caractériser.

On sélectionne pour chaque $V_k$ les éléments de fortes énergies ainsi que leurs positions spatiales. Ces éléments de forte énergie sont ceux qui présentent une valeur maximale par rapport à un *seuil* calculé selon la taille de l'image.

A cette étape de calcul, le nombre de droites est connu. On en déduit le nombre de composantes directionnelles $Ne$ en utilisant les propriétés spectrales simples de la composante directionnelle d'une image texturée. Ces propriétés sont :

1. Les droites observées dans le domaine spectral d'une composante directionnelle sont symétriques par rapport à l'origine. On peut par conséquent réduire le domaine d'investigation sur une moitié seulement du domaine considéré.

2. Les maxima retenus dans le vecteur sont candidats à représenter des droites appartenant à des éléments directionnels. A partir de la connaissance des positions respectives des droites sur le module de transformée de Fourier discrète TFD, on en déduit le nombre exact d'éléments directionnels. La position du maximum droite correspond à l'argument du maximum du vecteur $V_k$, les autres droites du même élément sont situées tous les min{L/T}.

Le mécanisme de projection est illustré sur la Figure 17 pour $(\alpha_k.\beta_k) = (2, -1)$.

Après traitement des vecteurs $V_k$ et production des couples de direction $(\hat{\alpha}_k, \hat{\beta}_k)$ on obtient les nombres de droites associés à chaque couple.

Ainsi on peut compter le nombre total d'éléments directionnels en utilisant les deux propriétés sus-mentionnées et on identifie les couples d'entiers $(\hat{a}_k, \hat{\beta}_k)$ associés à ces composantes qui sont les directions orthogonales à celles qui ont été retenues.

Pour tous ces couples $(\hat{\alpha}_k, \hat{\beta}_k)$ l'estimation des fréquences de chaque élément détecté est immédiate. En effet, si l'on considère uniquement les points de l'image d'origine le long de la droite d'équation $i\hat{\alpha}_k - j\hat{\beta}_k = c$, $c$ est la position du maximum dans $Vk$, et ces points constituent un signal monodimensionnel (1-D) harmonique d'amplitude constante et qui a pour fréquence $\hat{v}_l^{(\alpha,\beta)}$. Il suffit alors d'estimer la fréquence de ce signal 1-D par un procédé classique (localisation de la valeur maximale sur la TFD 1-D de ce nouveau signal).

En résumé, on peut mettre en oeuvre le procédé comportant les étapes suivantes :

On détermine le maximum de chaque projection.

Les maximums sont filtrés afin de ne garder que ceux supérieurs à un seuil.

■ Pour chaque maximum $m_i$, correspondant à un couple $(\hat{\alpha}_k, \hat{\beta}_k)$

■ on détermine le nombre de droites associées à ce couple d'après les propriétés décrites plus haut.

■ on calcule la fréquence associée à $(\hat{\alpha}_k, \hat{\beta}_k)$ qui correspond à l'intersection de la droite maximale (correspondant au maximum de la projection retenue) avec l'axe horizontal.

On décrira maintenant le calcul des amplitudes $\left\{\hat{s}_k^{(\alpha,\beta)}(t)\right\}$ et $\left\{\hat{t}_k^{(\alpha,\beta)}(t)\right\}$ qui sont les autres paramètres contenus dans le vecteur E mentionné plus haut.

Connaissant la direction $(\hat{\alpha}_k, \hat{\beta}_k)$ et la fréquence $V_k$, on peut déterminer les amplitudes $\hat{s}_k^{(\alpha,\beta)}(c)$ et $\hat{t}_k^{(\alpha,\beta)}(c)$, pour c vérifiant la formule $i\hat{\alpha}_k - j\hat{\beta}_k = c$, en utilisant un procédé de démodulation. En effet, $\hat{s}_k^{(\alpha,\beta)}(c)$ est égal à la moyenne des pixels le long de la droite d'équation $i\hat{\alpha}_k - j\hat{\beta}_k = c$ de la nouvelle image obtenue en multipliant $\tilde{\gamma}(i,j)$ par

$$\cos\left(\frac{\hat{v}_k^{(\alpha,\beta)}}{\hat{\alpha}_k^2 + \hat{\beta}_k^2}\left(i\hat{\beta}_k + j\hat{\alpha}_k\right)\right).$$ Ceci est traduit par l'équation

$$\hat{s}_k^{(\alpha,\beta)}(c) \cong \frac{1}{N_s}\sum_{i\hat{\alpha}-j\hat{\beta}=c}\tilde{y}(i,j)\cos\left(\frac{\hat{v}_k^{(\alpha,\beta)}}{\hat{\alpha}_k^2 + \hat{\beta}_k^2}\left(i\hat{\beta}_k + j\hat{\alpha}_k\right)\right) \qquad (20)$$

où $N_s$ n'est autre que le nombre d'éléments de ce nouveau signal. De la même manière, on obtient $\hat{t}_k^{(\alpha,\beta)}(c)$ en appliquant l'équation :

$$\hat{t}_k^{(\alpha,\beta)}(c) \cong \frac{1}{N_s} \sum_{i\hat{\alpha}-j\hat{\beta}=c} \widetilde{y}(i,j)\sin\left(\frac{\hat{v}_k^{(\alpha,\beta)}}{\hat{\alpha}_k^{\,2}+\hat{\beta}_k^{\,2}}\left(i\hat{\beta}_k + j\hat{\alpha}_k\right)\right) \qquad (21)$$

Le procédé décrit ci-dessus peut être résumé par les étapes suivantes :

Pour tout élément directionnel $(\hat{\alpha}_k,\beta_k)$ faire

Pour toute droite (d) calculer

1. la moyenne des points (i,j) pondérée par le $\cos\left(\dfrac{\hat{v}_k^{(\alpha,\beta)}}{\hat{\alpha}_k^{\,2}+\hat{\beta}_k^{\,2}}\left(i\hat{\beta}_k + j\hat{\alpha}_k\right)\right)$. Cette moyenne correspond à l'estimation du l'amplitude $\hat{s}_k^{(\alpha,\beta)}(d)$

2. la moyenne des points (i,j) pondérée par le $\sin\left(\dfrac{\hat{v}_k^{(\alpha,\beta)}}{\hat{\alpha}_k^{\,2}+\hat{\beta}_k^{\,2}}\left(i\hat{\beta}_k + j\hat{\alpha}_k\right)\right)$. Cette moyenne correspond à l'estimation du l'amplitère $\hat{t}_k^{(\alpha,\beta)}(d)$

Le tableau 3 ci-dessous récapitule les étapes principales du procédé de projection.

**Tableau 3**

| |
|---|
| Etape 1. Calculer l'ensemble de couples de projection $(\alpha_k,\beta_k)\in P_r$<br>Etape 2. Calculer le module de la TFD de l'image $\widetilde{y}(i,j)$ :<br>$\Psi(\omega,\varpi) = \lvert TFD(y(i,j))\rvert$ |
| Etape 3-Pour tout $(\alpha_k,\beta_k)\in P_r$,<br>                calculer le vecteur $V_k$ : la projection de $\Psi(\omega,v)$ suivant $(\alpha_k,\beta_k)$ d'après la formule (19) |
| Etape 4- Détection de droites :<br>        Pour tout $(\alpha_k,\beta_k) \in P_r$,<br>        &bull;   déterminer :<br>        &bull;   calculer $n_k$, le nombre de pixels de valeurs significatives rencontrés le long de la projection<br>        •   sauvegarder $n_k$ et $j_{max}$ l'indice du maximum dans $V_k$.<br>        •   sélectionner les directions qui justifient le critère<br><br>$$\frac{M_k}{n_k} > s_e$$<br><br>où $s_e$ est un seuil à définir, dépendant de la taille de l'image, Les directions retenues sont considérées comme celles de droites recherchées. |
| Etape 5- Sauvegarder les couples $(\hat{\alpha}_k,\beta_k)$ recherchés qui sont les orthogonaux des couples $(a_k,\beta_k)$ retenus dans l'étape 4. |

On décrira ci-dessous la détection et la caractérisation des informations texturales périodiques d'une image, qui sont contenues dans la composante harmonique$\{h(i,j)\}$. Cette composante peut être représentée par une somme finie de sinusoïdes 2-D :

$$h(i,j) = \sum_{p=1}^{P} C_p \cos 2\pi(i\omega_p + j\nu_p) + D_p \sin 2\pi(i\omega_p + j\nu_p), \qquad (22)$$

où

- $C_p$ et $D_p$ sont les amplitudes.
- $(\omega_p, \nu_p)$ est la $p^{ième}$ fréquence spatiale.

On a représenté sur la Figure 18a1 une image 91 contenant des composantes périodiques et, sur la Figure 18b1, une image synthétique contenant une composante périodique.

La Figure 18a2 représente une image 92 qui est une image module de la TFD présentant un ensemble de pics.

La Figure 18b2 représente une vue 3D, 94, de la TFD qui montre la présence d'une paire de pics symétriques 95, 96.

Sur le domaine spectral, la composante harmonique apparaît ainsi comme des paires de pics isolés symétriques par rapport à l'origine (cf. Figure 18 (a2)-(b2)). Cette composante est le reflet de l'existence de périodicités dans l'image.
Les informations que l'on cherche à déterminer sont les éléments du vecteur :

$$H = \left\{ P, \left\{ C_p, D_p, \omega_p, \nu_p \right\}_{p=1}^{P} \right\} \qquad (23)$$

Pour cela on commence par détecter la présence de cette composante périodique dans l'image module de Fourier et on estime ensuite ses paramètres.
La détection de la composante périodique consiste à déterminer la présence de pics isolés sur l'image module de la TFD. On opère de la même manière que dans le cas de la détermination de la composante directionnelle. D'après le procédé décrit dans le tableau 1, si la valeur $n_k$ *obtenue dans la phase 4 du procédé* décrit dans le tableau 1 est inférieure à un seuil, alors on est en présence de pics isolés qui caractérisent la présence de composante harmonique plutôt que de pics formant une droite continue.
La caractérisation de la composante périodique revient à localiser les pics isolés sur l'image module de la TFD.
Ces fréquences spatiales $(\hat{\omega}_p, \hat{\nu}_p)$ correspondent à la position de ces pics :

$$(\hat{\omega}_p, \hat{\nu}_p) = \arg\max_{(\omega,\nu)} \Psi(\omega,\nu) \qquad (24)$$

Pour le calcul des amplitudes $(\hat{C}_p, \hat{D}_p)$, on utilise un procédé de démodulation comme pour estimer les amplitudes de la composante directionnelle.
Pour chaque élément périodique de fréquence $(\hat{\omega}_p, \hat{\nu}_p)$, l'amplitude correspondante est identique à la moyenne des pixels de la nouvelle image obtenue en multipliant l'image $\{\tilde{y}(i,j)\}$ par $\cos(i\hat{\omega}_p + j\hat{\nu}_p)$. Ceci est traduit par les formules suivantes :

$$\hat{C}_p = \frac{1}{L \times T} \sum_{n=0}^{L-1} \sum_{m=0}^{T-1} y(n,m) \cos(n\hat{\omega}_p + m\hat{\nu}_p). \qquad (25)$$

$$\hat{D}_p = \frac{1}{L \times T} \sum_{n=0}^{L-1} \sum_{m=0}^{T-1} y(n,m) \cos(n\hat{\omega}_p + m\hat{\nu}_p) \qquad (26)$$

En résumé, un procédé d'estimation de la composante périodique comprend les étapes suivantes :

| |
|---|
| **Etape 1.** Localiser les pics isolés dans la deuxième moitié de l'image module de Fourier et compter leur nombre |
| **Etape 2.** Pour tout pic détecté : |
| ■      Calculer sa fréquence à l'aide de la formule (24) <br> ■      Calculer son amplitude à l'aide de la formule (25-26) |

Les dernières informations à extraire sont contenues dans la composante purement aléatoire $\{w(i,j)\}$. Cette composante peut être représentée par un modèle autorégressif 2-D de support demi-plan non symétrique (DPNS) fini défini par l'équation aux différences suivante:

$$w(i,j) = -\sum_{(k,l)\in S_{N,M}} a_{k,l}\, w(i-k,\, j-l) + u(i,j) \qquad (27)$$

où $\{a_{(k,l)}\}_{(k,l)\in S_{N,M}}$ sont les paramètres à déterminer pour tout $(k,l)$ appartenant à $S_{N,M} = \{(k,l)/k=0,1\leq l\leq M\}\cup\{(k,l)/ 1\leq k\leq N,-M\leq l\leq M\}$. Le couple $(N,M)$ s'appelle l'ordre du modèle.

- $\{u(i,j)\}$ est un bruit blanc gaussien de variance finie $\sigma_u^2$.

Les paramètres du modèle sont donnés par :

$$W = \left\{(N,M), \sigma_u^2, \{a_{k,l}\}_{(k,l)\in S_{N,M}}\right\} \qquad (28)$$

Les méthodes d'estimation des éléments de W sont nombreuses comme par exemple l'algorithme de Levinson 2D ou alors les méthodes adaptatives du type moindres carrés (MCR).

On décrira maintenant un procédé de caractérisation de la couleur d'une image dont on veut extraire des termes $t_i$ représentant des caractéristiques iconiques de cette image, la couleur étant un exemple particulier de ces caractéristiques qui peuvent comprendre d'autres caractéristiques telles que les moments algébriques ou géométriques, les propriétés statistiques, les propriétés spectrales des moments de pseudo-Zernicke.

La méthode est fondée sur la caractérisation perceptuelle de la couleur. En premier lieu on effectue une transformation des composantes de la couleur de l'image de l'espace RVB (Rouge, Vert, Bleu) encore dénommé *RGB,* vers l'espace *TSV* (Teinte Saturation Valeur) encore dénommé HSV. On obtient ainsi trois composantes : *Teinte, Saturation, Valeur. A* partir de ces trois composantes on détermine N couleurs ou composantes iconiques de limage. Chaque composante iconique Ci est représentée par un vecteur de M valeurs. Ces valeurs représentent la distribution angulaire et annulaire des points représentant chaque composante ainsi que le nombre de points de la composante en question.

La méthode développée est illustrée par la Figure 19 avec à titre d'exemple N =16 et M= 17.

Dans une première étape principale 110, à partir d'une image 11 de l'espace RGB, on procède à une transformation de l'image 111 de l'espace (R,G,B) à l'espace HSV (étape 112) pour obtenir une image dans l'espace HSV.

Le modèle HSV peut être défini de la façon suivante.

    **Teinte** *(H)* **:** varie de [0 360], et chaque angle représente une teinte.

    **Saturation** *(S)* **:** varie de [0 1], elle mesure la pureté des couleurs, et permet de distinguer les couleurs "vives", "pastels", ou "délavées ".

    **Valeur** *(V)* **:** Elle prend des valeurs de [0 1], elle indique si une couleur est claire ou sombre et dans quelle mesure elle se rapproche du blanc ou du noir.

Le modèle *HSV* est une transformation non linéaire du modèle de l'espace *(R,G,B)* .L'oeil humain peut distinguer 128 teintes ,130 saturations, et 23 ombres.

Pour le *Blanc V*=1 et *S*=0, le *noir* a une valeur *V*=0 tandis que la teinte *H* et la saturation *S sont* indéterminées. Lorsque *V*=1 et *S*=1 on a une couleur pure.

Chaque couleur est obtenue en rajoutant du blanc ou du noir à la couleur pure.

Pour avoir des couleurs plus claires on réduit *S* et on garde *H* et *V,* par contre, pour des couleurs foncées on rajoute du noir en réduisant *V* et on garde *H* et *S.*

Le passage de l'image couleur exprimée dans les coordonnées *(R,G,B) en une image exprimée dans l'espace (H,S,V) (*Teinte, Saturation, Valeur) s'effectue de la façon suivante :

Pour tout point de coordonnée (i,j) et de valeur ($R_k,B_k,G_k$) on produit un point de coordonnées (i,j) et valeur ($H_k,S_k,V_k$) avec :

$$V_k = \max(R_k, B_k, G_k)$$

$$S_k = \frac{V_k - \min(R_k, G_k, B_k)}{V_k}$$

$$H_k = \begin{cases} \dfrac{G_k - B_k}{V_k - \min(R_k, G_k, B_k)} & \text{si } V_k \text{ est égal à } R_k \\[2ex] 2 + \dfrac{B_k - R_k}{V_k - \min(R_k, G_k, B_k)} & \text{si } V_k \text{ est égal à } G_k \\[2ex] 4 + \dfrac{R_k - G_k}{V_k - \min(R_k, G_k, B_k)} & \text{si } V_k \text{ est égal à } B_k \end{cases}$$

On procède ensuite à une partition de l'espace HSV (étape 113).

A partir des valeurs de Teinte, Saturation, Valeur , on a défini N couleurs. Dans le cas où N est égal à 16, on a : Noir, Blanc, Gris clair, Gris foncé, Gris moyen, Rouge, Rose, Orange, Marron, Olive, Jaune, Vert, Bleu Ciel , Bleu-vert, Bleu , Pourpre, Magenta.

Pour chaque pixel on évalue à quelle couleur il appartient. Ensuite on calcule le nombre de points de chaque couleur.

Dans une deuxième étape principale 120, on procède à une caractérisation des partitions obtenues lors de la première étape principale 110.

Dans cette étape 120, on cherche à caractériser chaque partition Ci obtenue précédemment. Une partition est définie par sa composante iconique et par les coordonnées des pixels qui la constituent. La description d'une partition est fondée sur la caractérisation de la répartition spatiale de ces pixels (nuage de points). La méthode commence par le calcul du centre de gravité, l'axe principal du nuage de points et l'axe perpendiculaire à cet axe. Le nouveau repère est utilisé comme référence dans la décomposition de la partition Ci en plusieurs sous-partitions qui sont représentées par le pourcentage des points constituant chacune des sous-partitions. Le processus de caractérisation d'une partition Ci est le suivant :

- calculer le centre de gravité et l'angle d'orientation des composantes Ci définissant le repère de partitionnement,

- calculer la distribution angulaire des points de la partition Ci dans les N directions dans le sens contraire des aiguilles d'une montre, en N sous-partitions définies par :

$$(0°, \frac{360}{N}, \frac{2\text{x}360}{N}, ...., \frac{i\text{x}360}{N}, ...., \frac{(N-1)\text{x}360}{N})$$

- partitionner l'espace de l'image en carrés de rayons concentriques, avec calcul dans chaque rayon du nombre de points correspondant à chaque composante iconique.

Le vecteur caractéristique est obtenu à partir du nombre de points de chaque répartition de couleur Ci, du nombre de points dans les 08 sous-répartitions angulaires ainsi que du nombre de points de l'image.

Ainsi le vecteur caractéristique est représenté par 17 valeurs dans l'exemple considéré.

Sur la Figure 19, on a illustré la deuxième étape 120 de traitement à partir des composantes iconiques C0 à C15 en montrant pour les composantes C0 (module 121) et C15 (module 131) les différentes étapes effectuées, à savoir le partitionnement angulaire 122, 132 conduisant à un nombre de points dans les 8 orientations considérées (étape 123, 133) et le partitionnement annulaire 124, 134 conduisant à un nombre de points dans les 8 rayons considérés (étape 125, 135), ainsi que la prise en compte du nombre de pixels de composante C0 respectivement C15 dans l'image (étape 126, respectivement 136).

Les étapes 123, 125, 126 conduisent à la production de 17 valeurs pour la composante C0 (étape 127) tandis que les étapes 133, 135, 136 conduisent à la production de 17 valeurs pour la composante C15 (étape 137).

Naturellement, le processus est analogue pour les autres composantes C1 à C14.

Les Figures 20 et 21 illustrent le fait que le procédé décrit ci-dessus est invariant à la rotation.

Ainsi, dans l'exemple de la Figure 20, l'image est partitionnée en deux sous-ensembles, l'un contenant les croix x, l'autre les ronds 0. Après calcul du centre de gravité ainsi que de l'angle d'orientation θ, on obtient le repère d'orientation qui permettra d'obtenir les 04 sous-répartitions angulaires (0˚, 90˚, 180˚, 270˚).

Par la suite, on effectue une répartition annulaire, on calcule le nombre de points dans un rayon égal à 1 puis 2. On obtient le vecteur V0 caractéristique de l'image de la Figure 20 : 19 ; 6 ; 5 ; 4 ; 4 ; 8 ; 11.

L'image de la Figure 21 est obtenue en appliquant une rotation de 90˚ à l'image de la Figure 20. En appliquant le procédé ci-dessus à l'image de la Figure 21, on obtient un vecteur V1 caractérisant cette dernière qui montre que la rotation n'influence par le vecteur caractéristique. Cela permet de conclure que la méthode est invariante à la rotation.

Comme indiqué plus haut, les méthodes permettant d'obtenir pour une image les termes représentant les couleurs dominantes, les propriétés texturales ou les structures des zones dominantes de l'image, peuvent être appliquées aussi bien sur la totalité de l'image que sur des portions de l'image.

On décrira brièvement ci-dessous des processus de segmentation d'un document qui permettent de produire les portions de l'image à caractériser.

Selon une première technique possible, on procède à une décomposition statique. L'image est décomposée en blocs avec recouvrement ou sans recouvrement.

Selon une deuxième technique possible, on procède à une décomposition dynamique. Dans ce cas, la décomposition de l'image en portions est fonction du contenu de l'image.

Selon un premier exemple de technique de décomposition dynamique, les portions sont produites à partir des germes qui sont les points de singularité de l'image (les points d'inflexions). On commence par calculer les germes, qui sont ensuite fusionnés pour qu'il n'en reste qu'un nombre réduit et enfin les points de l'images sont fusionnés aux germes ayant les mêmes propriétés visuelles (statistiques) pour produire les portions ou les segments de l'image à caractériser.

Selon une autre technique faisant appel à une segmentation hiérarchique, les points de l'image sont fusionnés pour former les n premières classes. Ensuite les points de chacune des classes sont décomposés en m classes et ainsi de suite jusqu'à atteindre le nombre de classes désiré. Lors de la fusion, les points sont affectés à la classe la plus proche. Une classe est représentée par le centre de gravité et/ou un délimiteur (boîte englobante, segment, courbe, ...).

On décrira maintenant les étapes principales d'un procédé de caractérisation des formes d'une image.

La caractérisation de la forme s'effectue en plusieurs étapes :

Pour une suppression d'effet de zoom ou variation dû aux mouvement des éléments non rigides de l'image (mouvement des lèvres, des feuilles d'arbre, ...), on procède par une multirésolution suivie d'une décimation de l'image. Pour une réduction de l'effet de translation, l'image ou la portion de l'image est représentée par sa Transformée de Fourier. Pour une réduction de l'effet de zoom, l'image est définie dans l'espace logarithmique polaire.

On peut mettre en oeuvre les étapes suivantes :

a/ multirésolution f = wavelet(I,n) ; où I est l'image de départ et n est le nombre de décompositions
b/ projection de l'image dans l'espace logPolaire:

$g(l,m) = f(i,j)$ avec $i = l*\cos(m)$ et $j = l*\sin(m)$

c/ calcul de la transformée de Fourier de g : H = FFT(g) ;
d/ caractérisation de H :

d1/ projection de H dans plusieurs directions (0, 45, 90 , ...) : le résultat est un ensemble de vecteurs dont la dimension est égale à la dimension du segment de projection

d2/ calcul des propriétés statistiques de chaque vecteur de projection (moyenne, variance, les moments).

Le terme représentant la forme est constitué des valeurs des propriétés statistiques de chaque vecteur de projection.

**Revendications**

1. Procédé d'indexation de documents multimédias, comprenant au moins les étapes suivantes :

   (a) identification et extraction pour chaque document de termes $t_i$ constitués par des vecteurs caractérisant des propriétés du document multimédia à indexer, telles que la forme, la texture, la couleur ou la structure d'une image, l'énergie, le taux d'oscillation ou des informations fréquentielles d'un signal audio, ou un groupe de caractères d'un texte ,

   (b) stockage des termes $t_i$ caractérisant des propriétés du document multimédia dans une base de termes (3) comprenant P termes, **caractérisé en ce qu'**il comprend en outre les étapes suivantes :

   (c) détermination d'un nombre maximum N de concepts souhaités regroupant les termes $t_i$ pertinents, N étant un nombre entier inférieur à P, et chaque concept $C_i$ étant prévu pour regrouper tous les termes voisins du point de vue de leurs caractéristiques,

   (d) calcul de la matrice T de distances entre les termes $t_i$ de la base de termes,

   (e) décomposition de l'ensemble P des termes $t_i$ de la base de termes en N parties $P_j$ ($1 \leq j \leq N$) telles que P = P1 $UP_2 \cdots UP_j ... UP_N$, chaque partie $P_j$ comprenant un ensemble de termes $t_{ij}$ et étant représentée par un concept $C_j$, les termes $t_i$ étant répartis sur la base de la matrice T, de telle façon que les termes les plus éloignés les uns des autres se trouvent dans des parties $P_l$, $P_m$ distinctes et les termes proches les uns des autres se trouvent dans la même partie $P_l$,

   (f) structuration du dictionnaire de concepts (5) de manière à constituer un arbre binaire dans lequel chaque feuille de l'arbre binaire contient un concept $C_i$ du dictionnaire et chaque noeud de l'arbre contient les informations nécessaires à la scrutation de l'arbre lors d'une phase d'identification d'un document multimédia par comparaison avec les documents précédemment indexés, et

   (g) construction d'une base d'empreintes (25) constituée de l'ensemble des concepts $C_i$ représentant les termes $t_i$ des documents à indexer, chaque document étant associé à une empreinte qui lui est propre.

2. Procédé d'indexation selon la revendication 1, **caractérisé en ce que** l'on associe à chaque concept $C_i$ de la base d'empreintes (25) un ensemble d'informations comprenant le nombre NbT de termes dans les documents où le concept $C_i$ est présent.

3. Procédé d'indexation selon la revendication 1 ou la revendication 2, **caractérisé en ce que** pour chaque document où un concept c; est présent, on enregistre une empreinte du concept $C_i$ dans le document, cette empreinte comprenant la fréquence d'occurrence du concept $C_i$, l'identification des concepts qui sont voisins du concept $C_i$ dans le document et un score qui est une valeur moyenne des mesures de similarités entre le concept $C_i$ et les termes $t_i$ du document qui sont les plus proches du concept $C_i$.

4. Procédé d'indexation selon l'une quelconque des revendications 1 à 3, **caractérisé en ce qu'**il comprend une étape d'optimisation de la partition de l'ensemble P des termes de la base de termes pour décomposer cet ensemble P en M classes $C_i$ ($1 \leq i \leq M$, avec $M \leq P$), de manière à réduire l'erreur de la répartition de l'ensemble P des termes de la base de termes en N parties ($P_1$, $P_2$,... $P_N$) où chaque partie $P_i$ est représentée par le terme $t_i$ qui sera pris comme concept $C_i$, l'erreur commise $\varepsilon$ étant telle que $\varepsilon \ = \ \sum_{i=1}^{N} \varepsilon_{t_i}$ où $\varepsilon_{t_i} = \sum_{t_j \in P_i} d^2(t_i, t_j)$ est l'erreur commise lorsqu'on remplace les termes $t_j$ d'une partie $P_i$ par $t_i$.

5. Procédé d'indexation selon la revendication 4, **caractérisé en ce qu'**il comprend les étapes suivantes :

   (i) on décompose l'ensemble P de termes en deux parties $P_1$ et $P_2$;

   (ii) on détermine les deux termes les plus éloignés $t_i$ et $t_j$ de l'ensemble P correspondant à la plus grande distance $D_{ij}$ de la matrice T de distances ;

   (iii) pour chaque terme $t_k$ de l'ensemble P, on examine si la distance $D_{ki}$ entre le terme $t_k$ et le terme $t_i$ est plus

petite que la distance $D_{kj}$ entre le terme $t_k$ et le terme $t_j$, si c'est le cas on affecte le terme $t_k$ à la partie $P_1$ et si ce n'est pas le cas on affecte le terme $t_k$ à la partie $P_2$;
(iv) on itère l'étape (i) jusqu'à l'obtention du nombre N de points $P_i$ souhaité et à chaque itération on applique les étapes (ii) et (iii) sur les termes des parties $P_1$ et $P_2$.

6. Procédé d'indexation selon la revendication 4 ou la revendication 5, **caractérisé en ce qu'**il comprend une optimisation à partir des N parties disjointes $\{P_1, P_2,... P_N\}$ de l'ensemble P ainsi que des N termes $\{t_1, t_2, t_N\}$ qui les représentent pour réduire l'erreur de décomposition de l'ensemble P en N parties, et **en ce qu'**il comprend les étapes suivantes :

(i) calcul des centres de gravité $C_i$ des parties $P_i$

(ii) calcul des erreurs $\varepsilon C_i = \sum_{ij \in Pi} d^2(C_i, t_j)$ où $\varepsilon t_i = \sum_{ij \in Pi} d^2(t_i, t_j)$ lorsqu'on remplace les termes $t_j$ de la partie $P_i$ respectivement par $C_i$ et par $t_i$,
(iii) comparaison de $\varepsilon t_i$ et $\varepsilon C_i$ et remplacement de $t_i$ par $C_i$ si $\varepsilon C_i \leq \varepsilon t_i$,
(iv) calcul de la nouvelle matrice T de distances entre les termes $t_i$ de la base de termes et processus de décomposition de l'ensemble P des termes de la base de termes (3) en N parties, sauf si une condition d'arrêt

est remplie avec $\dfrac{\varepsilon c_t - \varepsilon c_{t+1}}{\varepsilon c_t}$ < seuil, où $\varepsilon C_t$ représente l'erreur commise à l'instant t.

7. Procédé d'indexation selon l'une quelconque des revendications 1 à 6, **caractérisé en ce que** pour effectuer une structuration du dictionnaire de concepts (5), on produit de façon itérative à chaque itération une carte de navigation en commençant par scinder l'ensemble des concepts en deux sous-ensembles, puis en sélectionnant un sous-ensemble à chaque itération jusqu'à l'obtention du nombre de groupes souhaité ou jusqu'à ce qu'un critère d'arrêt soit satisfait.

8. Procédé d'indexation selon la revendication 7, **caractérisé en ce que** le critère d'arrêt est constitué par le fait que les sous-ensembles obtenus sont tous homogènes avec un écart-type faible.

9. Procédé d'indexation selon la revendication 7 ou la revendication 8, **caractérisé en ce que** lors de la structuration du dictionnaire de concepts (5), on détermine des indicateurs de navigation à partir d'une matrice

$M = [C_1, C_2,... C_N] \in \Re^{p*N}$ de l'ensemble C des concepts $C_i \in \Re^p$ où $C_i$ représente un concept de p valeurs, selon les étapes suivantes :

(i) on calcule un représentant *w* de la matrice *M*
(ii) on calcule la matrice de covariance $\tilde{M}$ entre les éléments de la matrice M et le représentant *w* de la matrice *M*,
(iii) on calcule un axe de projection u des éléments de la matrice M,
(iv) on calcule la valeur pi = *d(u,$C_i$)* - *d(u, w)* et on décompose l'ensemble de concepts C en deux sous-ensembles C1 et C2 de la manière suivante :

$$\begin{cases} c_i \in C1 \; si \; pi \leq 0 \\ c_i \in C2 \; si \; pi > 0 \end{cases}$$

(v) on stocke dans le noeud associé à C les informations {u, w, |p1|, p2} où p1 est le maximum de tous les pi $\leq 0$ et p2 est le minimum de tous les pi > 0, l'ensemble des informations {u, w, |p1|, p2} constituant les indicateurs de navigation dans le dictionnaire de concepts (5).

10. Procédé d'indexation selon l'une quelconque des revendications 1 à 9, **caractérisé en ce que** l'on analyse à la fois les composantes structurelles et le complément de ces composantes structurelles constitué par les composantes texturales d'une image du document, et **en ce que** :

(a) lors de l'analyse des composantes structurelles de l'image

(a1) on procède à une répartition des zones frontières des structures de l'image en différentes classes selon l'orientation de la variation locale d'intensité de manière à définir des éléments de support structurel (ESS) de l'image, et
(a2) on procède par analyse statistique à la construction de termes constitués par des vecteurs décrivant les propriétés locales et globales des éléments de support structurels,

(b) lors de l'analyse des composantes texturales de l'image

(b1) on procède à une détection et une caractérisation paramétrique d'une composante purement aléatoire de l'image,
(b2) on procède à une détection et une caractérisation paramétrique d'une composante périodique de l'image,
(b3) on procède à une détection et une caractérisation paramétrique d'une composante directionnelle de l'image,

(c) on regroupe dans un nombre limité de concepts l'ensemble des éléments descriptifs de l'image constitués par d'une part les termes décrivant les propriétés locales et globales des éléments de support structurels et d'autre part les paramètres des caractérisations paramétriques des composantes aléatoire, périodique et directionnelle définissant les composantes texturales de l'image, et
(d) on définit pour chaque document une empreinte à partir des occurrences, des positions et des fréquences desdits concepts.

**11.** Procédé d'indexation selon la revendication 10, **caractérisé en ce que** les propriétés locales des éléments de support structurels prises en compte pour la construction de termes comprennent au moins le type de support choisi parmi une bande linéaire ou un arc de courbe, les dimensions en longueur et largeur du support, la direction principale du support et la forme et les propriétés statistiques des pixels constituant le support.

**12.** Procédé d'indexation selon la revendication 10 ou la revendication 11, **caractérisé en ce que** les propriétés globales des éléments de support structurels prises en compte pour la construction de termes comprennent au moins le nombre de chaque type de supports et leur disposition spatiale.

**13.** Procédé d'indexation selon l'une quelconque des revendications 10 à 12, **caractérisé en ce que** lors de l'analyse des composantes structurelles de l'image on procède à un test préalable de détection de la présence d'au moins une structure dans l'image et, en cas d'absence de structure, on passe directement à l'étape de l'analyse des composantes texturales de l'image.

**14.** Procédé d'indexation selon l'une quelconque des revendications 10 à 13, **caractérisé en ce que** pour procéder à une répartition des zones frontières des structures de l'image en différentes classes, à partir de l'image numérisée définie par l'ensemble des pixels y(i,j) où $(i,j) \in I \times J$, avec 1 et J désignant respectivement le nombre de lignes et le nombre de colonnes de l'image, on calcule l'image gradient vertical $g_v$ (i,j) avec $(i,j) \in I \times J$ et l'image gradient horizontal $g_h$ avec $(i,j) \in I \times J$ et on procède au partitionnement de l'image selon l'orientation locale de son gradient en un nombre fini de classes équidistantes, l'image contenant l'orientation du gradient étant définie par la formule

$$O(i,j) = \arctan\left[\frac{gh(i,j)}{gv(i,j)}\right],$$

on identifie les classes constituant des régions de support susceptibles de contenir des éléments de support significatifs, et à partir des régions de support, on détermine les éléments de support significatifs et on les répertorie selon des critères prédéterminés.

**15.** Procédé d'indexation selon l'une quelconque des revendications 1 à 9, **caractérisé en ce que** lors de l'indexation d'un document multimédia comportant des signaux vidéo, on choisit des termes $t_i$ constitués par des images-clés représentant des groupes d'images homogènes consécutives, et on détermine des concepts $C_i$ par regroupement

de termes $t_i$.

**16.** Procédé d'indexation selon la revendication 15, **caractérisé en ce que** pour déterminer des images-clés constituant des termes $t_i$ , on élabore d'abord un vecteur score VS comprenant un ensemble d'éléments VS(i) matérialisant la différence ou la similarité entre le contenu d'une image d'indice i et celui d'une image d'indice i-1, et on analyse le vecteur score VS afin de déterminer les images-clés qui correspondent aux maximums des valeurs des éléments VS(i) du vecteur score VS.

**17.** Procédé d'indexation selon la revendication 16, **caractérisé en ce qu'**une image d'indice j est considérée comme une image-clé si la valeur VS(j) de l'élément correspondant du vecteur score VS est un maximum et que la valeur VS(j) est située entre deux minimums min G et min D et que le minimum M1 tel que M1 = ($|VS_{(j)}$ - min G|, $|VS_{(j)}$ - min D|) est supérieur à un seuil donné.

**18.** Procédé d'indexation selon l'une quelconque des revendications 1 à 9, **caractérisé en ce que** lors de l'indexation d'un document multimédia comportant des composantes audio, on échantillonne et décompose le document en trames, qui sont ensuite regroupées en clips dont chacun est **caractérisé par** un terme $t_i$ constitué par un vecteur de paramètre.

**19.** Procédé d'indexation selon la revendication 18, **caractérisé en ce qu'**une trame comprend entre environ 512 et 2048 échantillons du document audio échantillonné.

**20.** Procédé d'indexation selon la revendication 18 ou la revendication 19, **caractérisé en ce que** les paramètres pris en compte pour la définition des termes $t_i$ comprennent des informations temporelles correspondant à au moins l'un des paramètres suivants : l'énergie des trames du signal audio, l'écart-type des énergies des trames dans les clips, le rapport des variations sonores, le rapport de basse énergie, le taux d'oscillation autour d'une valeur prédéterminée, le haut taux d'oscillation autour d'une valeur prédéterminée, la différence entre le nombre de taux d'oscillation au-dessus et au-dessous du taux d'oscillation moyen des trames de clips, la variance du taux d'oscillation, le rapport des trames silencieuses.

**21.** Procédé d'indexation selon l'une quelconque des revendications 18 à 20, **caractérisé en ce que** les paramètres pris en compte pour la définition des termes $t_i$ comprennent des informations fréquentielles correspondant à au moins l'un des paramètres suivants : le centre de gravité du spectre de fréquence de la transformée de Fourier courte du signal audio, la largeur de bande du signal audio, le rapport entre l'énergie dans une bande de fréquence et l'énergie totale dans toute la bande de fréquence du signal audio échantillonné, la valeur moyenne de la variation du spectre de deux trames adjacentes dans un clip, la fréquence de coupure d'un clip.

**22.** Procédé d'indexation selon l'une quelconque des revendications 18 à 21, **caractérisé en ce que** les paramètres pris en compte pour la définition des termes $t_i$ comprennent au moins la modulation d'énergie à 4 Hz.

**23.** Procédé d'indexation selon l'une quelconque des revendications 1 à 14, **caractérisé en ce que** l'on analyse les formes d'une image d'un document selon les étapes suivantes :

(a) on procède à une multirésolution suivie d'une décimation de l'image,
(b) on définit l'image dans l'espace logarithmique polaire.
(c) on représente l'image ou la portion de l'image concernée par sa transformée de Fourier H,
(d) on procède à une caractérisation de la transformée de Fourier H de la façon suivante :

(d1) on projette H dans plusieurs directions pour obtenir un ensemble de vecteurs dont la dimension est égale à la dimension du mouvement de projection,
(d2) on calcule les propriétés statistiques de chaque vecteur de projection, et

(e) on représente la forme de l'image par un terme $t_i$ constitué des valeurs des propriétés statistiques de chaque vecteur de projection.

**Claims**

**1.** A method of indexing multimedia documents, the method comprising at least the following steps:

a) for each document, identifying and extracting terms $t_i$ constituted by vectors characterizing properties of the multimedia document for indexing, such as shape, texture, color, or structure of an image, the energy, the oscillation rate or frequency information of an audio signal, or a group of characters of a text;

b) storing the terms $t_i$ characterizing the properties of the multimedia document in a term base (3) comprising P terms;

c) determining a maximum number N of desired concepts combining the most pertinent terms $t_i$, where N is an integer less than P, with each concept $C_i$ being designed to combine all terms that are neighboring from the point of view of their characteristics;

d) calculating the matrix T of distances between the terms $t_i$ of the term base;

e) decomposing the set P of terms $t_i$ of the term base into N portions $P_j$ ($1 \leq j \leq N$) such that $P = P_1 \cup P_2 ... \cup P_j ... \cup P_N$, each portion $P_j$ comprising a set of terms $t_{ij}$ and being represented by a concept $C_j$, the terms $t_i$ being distributed on the basis of the Matrix T in such a manner that terms that are farther away are to be found in distinct portions $P_l$, $P_m$ while terms that are closer together are to be found in the same portion $P_l$;

f) structuring a concept dictionary (5) so as to constitute a binary tree in which each leave of the binary tree contains a concept $C_i$ of the dictionary and each node of the tree contains the information necessary for scanning the tree during a stage of identifying a multimedia document by comparing it with previously-indexed documents; and

g) constructing a fingerprint base (25) made up of the set of concepts $C_i$ representing the terms $t_i$ of the documents to be indexed, each document being associated with a fingerprint that is specific thereto.

2. An indexing method according to claim 1, **characterized in that** each concept $C_i$ of the fingerprint base (25) is associated with a data set comprising the number of terms NbT in the documents in which the concept $C_i$ is present.

3. An indexing method according to claim 1 or claim 2, **characterized in that** for each document in which a concept $C_i$ is present, a fingerprint of the concept $C_i$ is registered in the document, said fingerprint containing the frequency with which the concept $C_i$ occurs, the identities of concepts neighboring the concept $C_i$ in the document, and a score which is a mean value of similarity measurements between the concept $C_i$ and the terms $t_i$ of the document that are the closest to the concept $C_i$.

4. An indexing method according to any one of claims 1 to 3, **characterized in that** it comprises a step of optimizing the partitioning of the set P of terms of the term base to decompose said set P into M classes $C_i$ ($1 \leq i \leq M$, where $M \leq P$), so as to reduce the distribution error of the set P of terms in the term base into N portions ($P_1$, $P_2$, ..., $P_N$) where each portion $P_i$ is represented by the term $t_i$ that is taken as the concept $C_i$, the error that is committed $\varepsilon$ being such that $\varepsilon = \sum_{i=1}^{N} \varepsilon_{t_i}$ where $\varepsilon_{t_i} = \sum_{t_j \in P_i} d^2(t_i, t_j)$ is the error committed by replacing the terms $t_j$ of a portion $P_i$ with $t_i$.

5. An indexing method according to claim 4, **characterized in that** it comprises the following steps:

i) decomposing the set P of terms into two portions $P_1$ and $P_2$;

ii) determining the two terms $t_i$ and $t_j$ of the set P that are the furthest apart, corresponding to the greatest distance $D_{ij}$ of the distance matrix T;

iii) for each term $t_k$ of the set P, examining to see whether the distance $D_{ki}$ between the term $t_k$ of the term $t_i$ is less that the distance $D_{kj}$ between the term $t_k$ and the term $t_j$, and if so, allocating the term $t_k$ to the portion $P_1$, and otherwise allocating the term $t_k$ to the portion $P_2$; and

iv) iterating step i) until the desired number N of portions $P_i$ has been obtained, and on each iteration applying the steps ii) and iii) on the terms of the portions $P_1$ and $P_2$.

6. An indexing method according to claim 4 or claim 5, **characterized in that** it includes optimization starting from N disjoint portions $\{P_1, P_2, ..., P_N\}$ of the set P and N terms $\{t_1, t_2, ..., t_N\}$ representing them in order to reduce the decomposition error of the set P into N portions, and **in that** it comprises the following steps:

i) calculating the centers of gravity $C_i$ of the portions $P_i$;

ii) calculating errors $\varepsilon C_i = \sum_{t_j \in P_i} d^2(C_i, t_j)$ and $\varepsilon t_i = \sum_{t_j \in P_i} d^2(t_i, t_j)$ when replacing the terms $t_j$

of the portion $P_i$ respectively by $C_i$ and by $t_i$;

iii) comparing $\varepsilon t_i$ and $\varepsilon C_i$ and replacing $t_i$ by $C_i$ if $\varepsilon c_i \leq \varepsilon t_i$; and

iv) calculating a new distance matrix T between the terms $t_i$ of the term base and the process of decomposing the set P of terms of the term base (3) into N portions, unless a stop condition is satisfied with

$$\frac{\varepsilon C_t - \varepsilon C_{t+1}}{\varepsilon C_t} < \texttt{threshold,}$$

where $\varepsilon c_t$ represents the error committed at instant $\underline{t}$.

**7.** An indexing method according to any one of claims 1 to 6, **characterized in that** for the purpose of structuring the concept dictionary (5), a navigation chart is produced iteratively on each iteration, beginning by splitting the set of concepts into two subsets, and then selecting one subset on each iteration until the desired number of groups is obtained or until a stop criterion is satisfied.

**8.** An indexing method according to claim 7, **characterized in that** the stop criterion is constituted by the fact that the subsets obtained are all homogeneous with small standard deviation.

**9.** An indexing method according to claim 7 or claim 8, **characterized in that** during the structuring of the concept dictionary (5), navigation indicators are determined from a matrix $\texttt{M} = [\texttt{c}_1, \texttt{c}_2, ..., \texttt{c}_N] \in \Re^{p*N}$ of the set C of concepts $\texttt{c}_i \in \Re^p$ where $c_i$ represents a concept of $\underline{p}$ values, by implementing the following steps:

i) calculating a representative $\underline{w}$ of the matrix M;

ii) calculating the covariance matrix $\tilde{M}$ between the elements of the matrix M and the representative $\underline{w}$ of the matrix M;

iii) calculating a projection axis $\underline{u}$ for projecting the elements of the matrix M;

iv) calculating the value pi = d(u,Ci) - d(u,w) and decomposing the set of concepts C into two subsets C1 and C2 as follows:

$$\begin{cases} \texttt{c}_i \in \texttt{C1 if pi} \leq 0 \\ \texttt{c}_i \in \texttt{C2 if pi} > 0 \end{cases}$$

v) storing the information {u, w, |p1|, p2} in the node associated with C, where p1 is the maximum of all pi $\leq$ 0 and p2 is the minimum of all pi > 0, the data set {u, w, |p1|, p2} constituting the navigation indicators in the concept dictionary (5).

**10.** An indexing method according to any one of claims 1 to 9, **characterized in that** both the structural components and the complements of said structural components constituted by the textural components of an image of the document are analyzed, and **in that**:

a) while analyzing the structural components of the image:

a1) boundary zones of the image structures are distributed into different classes depending on the orientation of the local variation in intensity so as to define structural support elements (ESS) of the image; and

a2) performing statistical analysis to construct terms constituted by vectors describing the local properties and the global properties of the structural support elements;

b) while analyzing the textural components of the image:

b1) detecting and performing parametric characterization of a purely random component of the image;

b2) detecting and performing parametric characterization of a periodic component of the image; and

b3) detecting and performing parametric characterization of a directional component of the image;

c) grouping in a limited number of concepts the set of descriptive elements of the image constituted firstly by the terms describing the local and global properties of structural support element and secondly by the parameters of the parametric characterizations of the random, periodic, and directional components defining the textural components of the image; and

d) for each document, defining a fingerprint from the occurrences, the positions, and the frequencies of said concepts.

**11.** An indexing method according to claim 10, **characterized in that** the local properties of the structural support elements taken into consideration for constructing terms comprise at least the support types selected from amongst a linear strip or a curved arc, the length and width dimensions of the support, the main direction of the support, and the shape and the statistical properties of the pixels constituting the support.

**12.** An indexing method according to claim 10 or claim 11, **characterized in that** the global properties of the structural support element taken into account for constructing terms comprise at least the number of each type of support and the spatial disposition thereof.

**13.** An indexing method according to any one of claims 10 to 12, **characterized in that** during analysis of the structural components of the image, a prior test is performed to detect whether at least one structure is present in the image, and in the absence of any structure, the method passes directly to the step of analyzing the textural components of the image.

**14.** An indexing method according to any one of claims 10 to 13, **characterized in that** in order to decompose boundary zones of the image structures into different classes, starting from the digitized image defined by the set of pixels y (i,j) where $(i,j) \in I \times J$, where I and J designate respectively the number of rows and the number of columns of the image, the vertical gradient image $g_v(i,j)$ where $(i,j) \in I \times J$ and the horizontal gradient image $g_h(i,j)$ with $(i,j) \in I \times J$ are calculated, and the image is partitioned depending on the local orientation of its gradient into a finite number of equidistant classes, the image containing the orientation of the gradient being defined by the equation:

$$O(i,j) = arc\ tan \left[\frac{gh(i,j)}{gv(i,j)}\right]$$

the classes constituting support regions likely to contain significant support elements are identified, and on the basis of the support regions, significant support elements are determined and indexed using predetermined criteria.

**15.** An indexing method according to any one of claims 1 to 9, **characterized in that** while indexing a multimedia document comprising video signals, terms $t_i$ are selected that are constituted by key-images representing groups of consecutive homogeneous images, and concepts $c_i$ are determined by grouping together terms $t_i$.

**16.** An indexing method according to claim 15, **characterized in that** in order to determine key-images constituting terms $t_i$, a score vector VS is initially generated comprising a set of elements VS(i) representative of the difference or similarity between the content of an image of index i and the content of an image of index i-1, and the score vector VS is analyzed in order to determine key-images which correspond to maximums of the values of the elements VS(i) of the score vector VS.

**17.** An indexing method according to claim 16, **characterized in that** an image of index j is considered as being a key-image if the value VS(j) of the corresponding element of the score vector VS is a maximum and the value VS(j) is situated between two minimums minL and minR, and if the minimum M1 such that M1 = $(|VS_{(j)} - minL|, |VS_{(j)} - minR|)$ is greater than a given threshold.

**18.** An indexing method according to any one of claims 1 to 9, **characterized in that** while indexing a multimedia document comprising audio components, the document is sampled and decomposed into frames, which frames are subsequently grouped together into clips each being **characterized by** a term $t_i$ constituted by a parameter vector.

**19.** An indexing method according to claim 18, **characterized in that** a frame comprises about 512 samples to about 2,048 samples of the sampled audio document.

20. An indexing method according to claim 18 or claim 19, **characterized in that** the parameters taken into account to define the terms $t_i$ comprise time information corresponding to at least one of the following parameters: the energy of the audio signal frames, the standard deviation of frame energies in the clips, the sound variation ratio, the low energy ratio, the rate of oscillation about a predetermined value, the high rate of oscillation about a predetermined value, the difference between the number of oscillation rates above and below the mean oscillation rate for the frames of the clips, the variance of the oscillation rate, the ratio of silent frames.

21. An indexing method according to any one of claims 18 to 20, **characterized in that** the parameters taken into account for defining the terms $t_i$ comprise frequency information corresponding to at least one of the following parameters: the center of gravity of the frequency spectrum of the short Fourier transform of the audio signal, the bandwidth of the audio signal, the ratio between the energy in a frequency band to the total energy in the entire frequency band of the sampled audio signal, the mean value of spectrum variation of two adjacent frames in a clip, the cutoff frequency of a clip.

22. An indexing method according to any one of claims 18 to 21, **characterized in that** the parameters taken into account for defining the terms $t_i$ comprise at least energy modulation at 4 Hz.

23. An indexing method according to any one of claims 1 to 14, **characterized in that** the shapes of an image of a document are analyzed using the following steps:

    a) performing multiresolution followed by decimation of the image;
    b) defining the image in polar logarithmic space;
    c) representing the query image or image portion by its Fourier transform H;
    d) characterizing the Fourier transform H as follows:

        d1) projecting H in a plurality of directions to obtain a set of vectors of dimension equal to the projection movement dimension; and
        d2) calculating the statistical properties of each projection vector; and

    e) representing the shape of the image by a term $t_i$ constituted by values for the statistical properties of each projection vector.

## Patentansprüche

1. Verfahren zur Indexierung von Multimediadokumenten, umfassend wenigstens folgende Schritte:

    (a) Erkennung und Extraktion für jedes Dokument von aus Vektoren bestehenden Elementen $t_i$, die die Eigenschaften des zu indexierenden Dokuments wie die Form, die Textur, die Farbe oder die Struktur eines Bildes, die Energie, die Frequenz oder die Frequenzinformationen eines Audiosignals oder einer Gruppe von Schriftzeichen eines Textes kennzeichnen,
    (b) Speichern der Elemente $t_i$, die die Eigenschaften des Multimediadokumentes kennzeichnen, in einer Elementbasis (3) mit P Elementen,

    **dadurch gekennzeichnet, daß** es ferner folgende Schritte umfaßt:

    (c) Ermitteln einer maximalen Anzahl N von Begriffen, die die relevanten Elemente $t_i$ gruppieren sollen, wobei N eine ganze Zahl kleiner als P ist und jeder Begriff $c_i$ vorgesehen ist, um alle Begriffe zu gruppieren, die bezüglich ihrer Eigenschaften ähnlich sind,
    (d) Berechnen der Matrix T der Abstände zwischen den Elementen $t_i$ der Elementenbasis,
    (e) Zerlegung der Menge P der Elemente $t_i$ der Elementenbasis in N Teile $P_j$ ($1 \leq j \leq$ N), so daß P = $P_1$ U$P_S$··· U$P_j$ ··· U$P_n$ ist, wobei jeder Teil $P_j$ eine Menge von Elementen $t_{ij}$ umfaßt und durch einen Begriff $c_j$ dargestellt wird, wobei die Elemente $t_i$ auf Basis der Matrix T derart verteilt sind, daß die am weitesten voneinander entfernten Elemente sich in bestimmten Teilen $P_l$, $P_m$ befinden und die benachbarten Teile sich im gleichen Teil $P_l$ befinden,
    (f) Strukturierung eines Begriffslexikons (5) derart, daß eine binäre Baumstruktur gebildet wird, bei welcher jeder Zweig der binären Baumstruktur einen Begriff $c_i$ des Lexikons enthält und jeder Knoten der binären Baumstruktur die notwendigen Informationen enthält, die für die Baumabfrage während einer Identifikationsphase eines Multimediadokumentes mittels Vergleich mit vorher indexierten Dokumenten notwendig sind, und (g) Aufbau einer Basis von Abdrücken (25) bestehend aus der Menge der Begriffe $c_i$, die die Elemente $t_i$ der zu indexierenden Dokumente darstellen, wobei jedes Dokument mit einem für es eigenen Abdruck verknüpft ist.

2. Verfahren zur Indexierung nach Anspruch 1, **dadurch gekennzeichnet, daß** jeder Begriff $c_i$ der Basis von Abdrücken (25) mit einer Menge von Informationen umfassend die Anzahl NbT der Elemente in den Dokumenten, in welchen der Begriff $c_i$ vorhanden ist, verknüpft ist.

3. Verfahren zur Indexierung nach Anspruch 1 oder Anspruch 2, **dadurch gekennzeichnet, daß** für jedes Dokument, in welchem ein Begriff $c_i$ vorhanden ist, ein Abdruck des Begriffs $c_i$ in dem Dokument gespeichert wird, wobei der Abdruck die Auftretungsfrequenz des Begriffs $c_i$, die Identifizierung der Begriffe, die dem Begriff $c_i$ in dem Dokument nahe sind, und einen Wert, der ein Mittelwert der Ähnlichkeitsmessungen zwischen dem Begriff $c_i$ und den Elementen $t_i$ des Dokuments ist, die dem Begriff $c_i$ am nächsten sind, umfaßt.

4. Verfahren zur Indexierung nach einem der Ansprüche 1 bis 3, **dadurch gekennzeichnet, daß** es einen Schritt der Optimierung der Partition der Menge P der Elemente der Elementenbasis zur Zerlegung der Menge P in M Klassen $C_i$ ($1 \le i \le M$, mit $M \le P$) umfaßt, so daß der Fehler der Verteilung der Menge P der Elemente der Elementenbasis in N Teile ($P_1$, $P_2$,... $P_N$) gemindert wird, wobei jeder Teil $P_i$ durch ein Element $t_i$ dargestellt ist, daß als Begriff $c_i$ ausgewählt wird, wobei der begangene Fehler gleich $\varepsilon = \sum_{i=1}^{N} \varepsilon_{t_i}$ ist, wobei $\varepsilon_{t_i} = \sum_{t_j \in P_i} d^2(t_i, t_j)$ der bei Substitution der Elemente $t_j$ eines Teils $P_i$ mit $t_i$ begangene Fehler ist.

5. Verfahren zur Indexierung nach Anspruch 4, **dadurch gekennzeichnet, daß** es folgende Schritte umfaßt:

   (i) man zerlegt die Menge P der Elemente in zwei Teile $P_1$ und $P_2$;
   (ii) man ermittelt die zwei am weitesten entfernten Elemente $t_i$ und $t_j$ der Menge P, die dem größten Abstand $D_{ij}$ der Matrix T der Abstände entsprechen;
   (iii) man prüft für jedes Element $t_k$ der Menge P, ob der Abstand $D_{ki}$ zwischen dem Element $t_k$ und dem Element $t_i$ kleiner ist als der Abstand $D_{kj}$ zwischen dem Element $t_k$ und dem Element $t_j$, wobei bei Erfüllung das Element $t_k$ dem Teil $P_1$ zugeordnet wird und bei Nichterfüllung des Elements $t_k$ dem Teil $P_2$ zugeordnet wird;
   (iv) man wiederholt Schritt (i) bis zur Erhaltung einer gewünschten Anzahl N von Punkten $P_i$ und man wendet bei jeder Wiederholung die Schritte (ii) und (iii) auf die Elemente der Teile $P_1$ und $P_2$ an.

6. Verfahren zur Indexierung nach Anspruch 4 oder nach Anspruch 5, **dadurch gekennzeichnet, daß** es eine Optimierung ausgehend aus den N getrennten Teilen $\{P_1, P_2,... P_N\}$ der Menge P als auch aus den N Elementen $\{t_1, t_2, t_N\}$, die diese darstellen, umfaßt, um den Fehler der Zerlegung der Menge P in N Teile zu mindern, und daß es folgende Schritte umfaßt:

   (i) Berechnen der Schwerpunkte $C_i$ der Teile $P_i$

   (ii) Berechnen der Fehler $\varepsilon C_i = \sum_{ti \in Pi} d^2(C_i, t_j)$ und $\varepsilon t_i = \sum_{tj \in Pi} d^2(t_i, t_j)$ wenn die Elemente $t_i$ der Teile $P_i$ jeweils mit $C_i$ und $t_i$ ersetzt werden,
   (iii) Vergleichen von $\varepsilon t_i$ und $\varepsilon c_i$ und Ersetzen von $t_i$ durch $C_i$ wenn $\varepsilon c_i \le \varepsilon t_i$
   (iv) Berechnen der neuen Matrix T der Abstände zwischen den Elementen $t_i$ der Elementenbasis und Zerlegen der Menge P der Elemente der Elementenbasis (3) in N Teile, außer wenn eine Abbruchbedingung mit $$\frac{\varepsilon c_t - \varepsilon c_{t+1}}{\varepsilon c_t} < \text{Schwelle}$$ erfüllt wird, wobei $\varepsilon c_t$ den beim Zeitpunkt t begangenen Fehler darstellt.

7. Verfahren zur Indexierung nach einem der Ansprüche 1 bis 6, **dadurch gekennzeichnet, daß** man, um eine Strukturierung des Begriffslexikons (5) durchzuführen, iterativ bei jeder Wiederholung eine Navigationskarte erzeugt, wobei mit einer Teilung der Menge der Begriffe in zwei Untermengen begonnen wird und anschließend bei jeder Wiederholung eine Untermenge ausgewählt wird, bis die gewünschte Anzahl von Gruppen erreicht oder eine Abbruchbedingung erfüllt ist.

8. Verfahren zur Indexierung nach Anspruch 7, **dadurch gekennzeichnet, daß** die Abbruchbedingung in der Tatsache besteht, daß alle enthaltenen Untermengen mit einer schwachen Standardabweichung homogen sind.

9. Verfahren zur Indexierung nach Anspruch 7 oder Anspruch 8, **dadurch gekennzeichnet, daß**, während der Strukturierung des Begriffslexikons (5), man Navigationsindikatoren ausgehend von einer

   Matrix $M = [c_1, c_2, \ldots c_N] \quad \in \mathfrak{R}^{p*N}$ der Menge C der Begriffe $c_i \in \mathfrak{R}^p$ ermittelt, wobei $c_i$ ein Begriff der p-Werte darstellt, gemäß folgenden Schritten:

   (i) man berechnet einen Vertreter $w$ der Matrix $\widetilde{M}$,
   (ii) man berechnet die Kovarianzmatrix $\widetilde{M}$ zwischen den Elementen der Matrix M und dem Vertreter $w$ der Matrix M,
   (iii) man berechnet eine Projektionsachse $u$ der Elemente der Matrix M,
   (iv) man berechnet den Wert pi = d $(u,c_i)$ - $d(u, w)$ und man zerlegt die Menge der Begriffe C in zwei Untermengen C1 und C2 wie folgend:

$$\begin{cases} c_i \in C1 \ si \ pi \leq 0 \\ c_i \in C2 \ si \ pi > 0 \end{cases}$$

   (v) man speichert in dem mit C verknüpften Knoten die Informationen {u, w, |p1|,p2}, wobei p1 das Maximum aller pi $\leq$ 0 und p2 das Maximum aller pi $\geq$ 0 ist, wobei die Menge der Informationen {u, w, |p1|, p2} die Navigationsindikatoren in dem Begriffslexikon (5) darstellt.

10. Verfahren zur Indexierung nach einem der vorhergehenden Ansprüche 1 bis 9, **dadurch gekennzeichnet, daß** anhand von Strukturbestandteilen und des Komplements der Strukturbestandteile Texturbestandteile eines Bildes des Dokuments analysiert werden und daß:

    (a) bei der Analyse der Strukturbestandteile des Bildes

       (a1) man eine Aufteilung der Grenzzonen der Strukturen des Bildes in verschiedene Klassen an Hand der Orientierung der lokalen Änderung der Intensität derart ausführt, daß Strukturträgerelemente (ESS) des Bildes definiert werden, und
       (a2) man an Hand einer statistischen Analyse den Aufbau der Elemente, die von lokale und globale Eigenschaften der Strukturträgerelemente beschreibenden Vektoren gebildet werden, durchführt,

    (b) bei der Analyse der Texturbestandteile des Bildes

       (b1) man eine Ermittlung und eine parametrische Charakterisierung eines rein zufallsbedingten Bestandteils des Bildes durchführt,
       (b2) man eine Ermittlung und eine parametrische Charakterisierung eines periodischen Bestandteils des Bildes durchführt,
       (b3) man eine Ermittlung und eine parametrische Charakterisierung eines Richtungsbestandteils des Bildes durchführt,

    (c) man die Menge der beschreibenden Elemente des Bildes, die einerseits aus den lokalen und globalen Eigenschaften der Strukturträgerelemente und andererseits den Parametern der parametrischen Charakterisierungen der zufallsbedingten und periodischen Bestandteile und Richtungsbestandteile, die die Texturbestandteile des Bildes definieren, bestehen, in eine begrenzte Anzahl von Begriffen gruppiert, und
    (d) man für jedes Dokument einen Abdruck ausgehend von den Auftretungshäufigkeiten, den Positionen und den Frequenzen der Begriffe definiert.

**11.** Verfahren zur Indexierung nach Anspruch 10, **dadurch gekennzeichnet, daß** die lokalen Eigenschaften der Strukturträgerelemente, die für den Aufbau der Elemente in Betracht gezogen werden, wenigstens den Typ von Träger gewählt aus der Linearspannbreite oder dem Kurvenbogen, Abmessungen in Länge und Breite des Trägers, der Ausrichtung des Trägers und der Form und den statistischen Eigenschaften der Pixel, die den Träger ausbilden, umfassen.

**12.** Verfahren zur Indexierung nach Anspruch 10 oder Anspruch 11, **dadurch gekennzeichnet, daß** die globalen Eigenschaften der Strukturträgerelemente, die für den Aufbau der Elemente in Betracht gezogen werden, wenigstens die Anzahl jeden Typs von Trägern und ihre räumliche Anordnung umfassen.

**13.** Verfahren zur Indexierung nach einem der Ansprüche 10 bis 12, **dadurch gekennzeichnet, daß** bei der Analyse der strukturellen Bestandteile des Bildes vorab mit einem Test zur Ermittlung der Anwesenheit wenigstens einer Struktur in dem Bild verfahren wird und daß bei Abwesenheit der Struktur direkt zum Schritt der Analyse der Texturbestandteile des Bildes übergegangen wird.

**14.** Verfahren zur Indexierung nach einem der Ansprüche 10 bis 13, **dadurch gekennzeichnet, daß**, um die Grenzzonen der Strukturen des Bildes in verschiedene Klassen aufzuteilen, ausgehend von dem digitalisierten Bild, das von der Menge der Pixel y (i,j) wo (i,j) $\in$ I x J definiert wird, wobei I und J jeweils die Anzahl der Zeilen und die Anzahl der Spalten des Bildes darstellen, man den vertikalen Bildgradienten $g_v$ (i,j) mit (i,j) $\in$ I x J und den horizontalen im Bildgradienten $g_h$ mit (i,j) $\in$ I x J berechnet und man das Bild nach der lokalen Orientierung seines Gradienten und einer beschränkten Anzahl von abstandsgleichen Klassen aufteilt, wobei das die Orientierung des Gradienten enthaltende Bild durch die Formel

$$O\ (i,j) = arc\ tan\ \left[ \frac{gh(i, j)}{gv(i, j)} \right] ,$$

definiert wird, man die Klassen, die Regionen darstellen, die geeignet sind, bezeichnende Trägerelemente zu enthalten, bestimmt, und man davon ausgehend, die bezeichnenden Trägerelemente bestimmt und sie nach vorgegebenen Kriterien verzeichnet.

**15.** Verfahren zur Indexierung nach einem der Ansprüche 1 bis 9, **dadurch gekennzeichnet, daß** bei der Indexierung eines Multimediadokuments umfassend Videosignale, man Elemente $t_i$ auswählt, die aus Schlüsselbildern bestehen, die Gruppen von aufeinanderfolgenden gleichmäßigen Bilder repräsentieren, und man den Begriff $c_i$ durch Gruppierung der Elemente $t_i$ ermittelt.

**16.** Verfahren zur Indexierung nach Anspruch 15, **dadurch gekennzeichnet, daß** man, um die Schlüsselbilder zu bestimmen, vorab einen Wert-Vektor VS berechnet, der eine Menge von Elementen VS(i) umfaßt, die den Unterschied oder die Ähnlichkeit zwischen dem Inhalt eines mit i indizierten Bildes und dem eines mit i-1 indizierten Bildes darstellen, und man den Wert-Vektor VS analysiert, um die Schlüsselbilder zu ermitteln, die dem Maximum der Werte der Elemente VS(i) des Wert-Vektors VS entsprechen.

**17.** Verfahren zur Indexierung nach Anspruch 16, **dadurch gekennzeichnet, daß** ein mit j indiziertes Bild als Schlüsselbild betrachtet wird, wenn der Wert VS(j) des dem Wert-Vektor VS entsprechenden Elements ein Maximum ist und der Wert VS(j) zwischen zwei Minima min G und min D angeordnet ist und das Minimum M1 mit

$$M1 = \quad (|VS_{(j)} - min\ G|,\ |VS_{(j)} - min\ D|)$$

größer als eine gegebene Schwelle ist.

**18.** Verfahren zur Indexierung nach einem der Ansprüche 1 bis 9, **dadurch gekennzeichnet, daß** man bei der Indexierung eines eine Audiokomponente umfassenden Multimediadokumentes das Dokument abtastet und in Raster zerlegt, die anschließend zu Clips zusammengruppiert werden, von denen jeder durch ein Element $t_i$ aus einem Parametervektor **gekennzeichnet** ist.

**19.** Verfahren zur Indexierung nach Anspruch 18, **dadurch gekennzeichnet, daß** ein Raster zwischen 512 und 2018 Fragmente des abgetasteten Audiodokuments umfaßt.

**20.** Verfahren zu Indexierung nach Anspruch 18, **dadurch gekennzeichnet, daß** die für die Definition der Elemente $t_i$ in Betracht gezogenen Parameter Zeitinformationen umfassen, die wenigstens einen der folgenden Parameter umfassen: die Energie der Raster des Audiosignals, die Standardabweichung der Energien der Raster in den Clips, das Verhältnis der Klangvariationen, das Verhältnis der Baßenergien, die Ostillationsrate um einen vorgegebenen Wert, die höchste Ostillationsrate um einen vorgegebenen Wert, den Unterschied zwischen der Anzahl von Frequenzen über und unter der durchschnittlichen Frequenz der Raster der der Clips, die Varianz der Frequenz und das Verhältnis der stummen Raster.

**21.** Verfahren zu Indexierung nach Anspruch 18, **dadurch gekennzeichnet, daß** die für die Definition der Elemente $t_i$ in Betracht gezogenen Parameter Frequenzinformationen umfassen, die wenigstens einem der folgenden Parameter entsprechen: dem Schwerpunkt des Frequenzspektrums der Short-Time-FourierTransformierten des Audiosignals, der Bandbreite des Audiosignals, dem Verhältnis zwischen der Energie in einem Frequenzband und der Gesamtenergie in dem Gesamtfrequenzband des abgetasteten Audiosignals, dem Mittelwert der Variation des Spektrums zweier im Clip benachbarter Raster, der Grenzfrequenz eines Clips.

**22.** Verfahren zur Indexierung nach einem der Ansprüche 18 bis 21, **dadurch gekennzeichnet, daß** die für die Definition der Elemente $t_i$ in Betracht gezogenen Parameter wenigstens die Energiemodulierung bei 4 Hz umfassen.

**23.** Verfahren zur Indexierung nach einem der Ansprüche 1 bis 14, **dadurch gekennzeichnet, daß** man die Gestaltung eines Bildes eines Dokumentes gemäß den folgenden Schritten analysiert:

(a) man führt eine Multiauflösung gefolgt von einer Herabsetzung des Bildes durch,
(b) man definiert das Bild in einem logarithmischen Polarraum,
(c) man stellt das Bild oder den betroffenen Teil des Bildes durch seine Fouriertransformation H dar,
(d) man führt eine Charakterisierung der Fouriertransformation H wie folgt durch:

(d1) man projiziert H in verschiedene Richtungen, um eine Menge von Vektoren zu erhalten, deren Dimension gleich der Dimension der Bewegung der Projektion ist,
(d2) man berechnet die statistischen Eigenschaften jedes Projektionsvektors, und

(e) man stellt die Gestaltung des Bildes durch ein Element $t_i$ dar, das aus den Werten der statistischen Eigenschaften jedes Projektionsvektors besteht.

**1**

| Base de documents |

→

**2**

Extraction
de Termes

→

**3**

Base
De
Termes

→

**4**

Extraction
de Concepts

→

**5**

Dictionnaire
De
Concepts

# FIG.1

**2**

$C_1$

$w_{11}$ $w_{12}$ ... $w_{1n}$

$t_1$ $t_2$ $t_n$

$C_2$

$w_{21}$ $w_{22}$ ... $w_{2n}$

$t_1$ $t_2$ $t_n$

...

$C_m$

$w_{m1}$ $w_{m2}$ ... $w_{mn}$

$t_1$ $t_2$ $t_n$

# FIG.2

**5**

Dictionnaire
De
Concepts

→

**6**

Répartition
Des
Concepts

→

**7**

Cartes
De
Concepts

→

**8**

Détecteur
de
Singularités

→

**9**

Cartes
De
Concepts
+
Indicateurs
De
navigation

# FIG.3

11a  11b  11c

10

11

12

13

11a

Adresse du
document
NbTermes
Fréquence
Concepts Voisins
Score

14

Base URL

## FIG.4

21

Termes de la base

22

Concepts de la base

Génération des empreints

Projection des termes dans l'espace
de concepts

23

Mise à jour de l'empreinte des
concepts

24

Base Empreintes

25

20

Enregistrement des Empreintes

26

## FIG.5

FIG.6

FIG.7

**51**

Base de connaissance

**52**

Document à protéger

Extraction de termes **53**

Termes **54**

Projection dans l'espace
des termes de la base de référence **55**

*Description vectorielle: les valeurs de pertinence
des termes dans le document à protéger* **56**

**57** Répartition

**58** Groupe 1 | Groupe 2 **58** ... | Groupe N **58**

Projection dans l'espace
des concepts de chaque groupe **59**

**61**

**61** Partition 1 | Partition 2 **61** ... | Partition N

Projection orthogonale **62**

**63**

**63** DVR1 | DVR 2 **63** ... | DVR N

# FIG.8

FIG.9

Organigramme de l'extraction des termes

Caractérisation des objets de l'image en supports structurels — 71

Si existence de fond texturé — 72

73 — Caractérisation du fond texturé En supports spectraux et paramètres AR

Caractérisation de la couleur de fond — 74

Stockage des termes Constructions d'empreintes — 75

FIG.10

15
$\{\tilde{y}(i,j)\}$
Image régulière et homogène

16
$\{w(i,j)\}$
Composante purement aléatoire

17
$\{h(i,j)\}$
Composante harmonique

18
$\{e(i,j)\}$
Composante directionnelle

81 FIG.11    82 FIG.12    83 FIG.13

84

FIG.15a

FIG.15a1

86

FIG.15b

FIG.15b1

88

FIG.15c

FIG.15c1

44

FIG.14 a

FIG.14 b

FIG.14 c

FIG.14 d

FIG.14 e

FIG.14 f

FIG.16

FIG.17

FIG.18a1

FIG.18a2

FIG.18b1

FIG.18b2

FIG.20

FIG.21

| 1 ère Etape | ⌐110 |

**111**       **112**       Image HSV       **113**

Image RGB → Transformation : RGB - HSV → Quantification de l'espace iconique

↓ ↓       ↓
C0 C1       C15

| 2 ème Etape | ⌐120 |

**121**       **122**       **123**       **127**

Composante iconique C0
**124**
→ Partitionnement angulaire → Nbre de Points dans les 08 orientations .
→ Partitionnement annulaire **125** → Nbre de Points dans les 08 rayons .
Vecteur de 17 valeurs pour la composante iconique C0

Nombre de Pixels de composante iconique C0 dans l'image

C1 ·

C2 ·

·

**126**

·

C14 **131**       **132**       **133**       **137**

Composante iconique C15
**134**
→ Partitionnement angulaire → Nbre de Points dans les 08 orientations.
→ Partitionnement annulaire **135** → Nbre de Points dans les 08 rayons.
Vecteur de 17 valeurs pour la composante iconique C15

Nombre de Pixels de composante iconique C15 dans l'image

**136**

# FIG.19

FIG.22

FIG.23a

FIG.23b

EP 1 697 862 B1

FIG.24a

FIG.24b

FIG.25a

FIG.25b

FIG.26a

FIG.26b

FIG.29

FIG.27a

FIG.27b

FIG.28a

FIG.28b

FIG.30

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

• **Y. Chang et al.** Conceptual retrieval based on feature clustering of documents. *Proceedings of ACM Sigir Workshop on Mathematical-Formal Methods in Information Retrieval,* Août 2002, 1-10